(19) Europäisches Patentamt
European Patent Office
Office européen des brevets

(11) **EP 1 192 006 B1**

(12) **EUROPEAN PATENT SPECIFICATION**

(45) Date of publication and mention of the grant of the patent:
**14.05.2008 Bulletin 2008/20**

(51) Int Cl.:
***B01L 3/00*** (2006.01) ***G01N 21/07*** (2006.01)

(21) Application number: **00944835.8**

(22) Date of filing: **22.06.2000**

(86) International application number:
**PCT/US2000/017378**

(87) International publication number:
**WO 2000/078455 (28.12.2000 Gazette 2000/52)**

(54) **DEVICES FOR THE PERFORMANCE OF MINIATURISED IN VITRO AMPLIFICATION ASSAYS**

VORRICHTUNGEN ZUR DURCHFUEHRUNG VON MINIATURISIERTEN IN VITRO AMPLIFIZIERUNGSASSAYS

DISPOSITIFS SERVANT AU FONCTIONNEMENT D'ESSAIS D'AMPLIFICATION MINIATURISÉS IN VITRO

(84) Designated Contracting States:
**AT BE CH CY DE DK ES FI FR GB GR IE IT LI LU MC NL PT SE**

(30) Priority: **22.06.1999 US 140477 P**

(43) Date of publication of application:
**03.04.2002 Bulletin 2002/14**

(73) Proprietor: **Tecan Trading AG**
**8708 Männedorf (CH)**

(72) Inventors:
 • **KELLOGG, Gregory, J.**
  **Cambridge, MA 02139 (US)**
 • **ABLE, Charles**
  **Cambridge, MA 02141 (US)**
 • **ARNOLD, Todd**
  **Glastonbury, CT 06033 (US)**
 • **CARVALHO, Bruce, L.**
  **Watertown, MA 02472 (US)**
 • **LIN, Joseph**
  **Cambridge, MA 02139 (US)**
 • **KIEFFER-HIGGINS, Stephen**
  **Boston, MA 02115 (US)**
 • **SHEPPARD, Norman, F.**
  **Bedford, MA 01730 (US)**

(74) Representative: **Heusch, Christian**
**OK pat AG**
**Chamerstrasse 50**
**6300 Zug (CH)**

(56) References cited:
**EP-A- 0 693 560        WO-A-97/21090**
**WO-A-98/53311**

 • **PATENT ABSTRACTS OF JAPAN vol. 012, no. 319 (P-751), 30 August 1988 (1988-08-30) -& JP 63 085428 A (SHIMADZU CORP), 15 April 1988 (1988-04-15)**

**Description**

This invention relates to an apparatus for performing microanalytic and microsynthetic analyses and procedures. In particular, the invention supports microminiaturization of genetic, biochemical and bioanalytic processes. Specifically, the present invention provides devices for the performance of integrated and miniaturized sample preparation, nucleic acid amplification, and nucleic acid detection assays. These assays may be performed for a variety of purposes, including but not limited to forensics, life sciences research, and clinical and molecular diagnostics. The invention may be used on a variety of liquid samples of interest, including bacterial and cell cultures as well as whole blood and processed tissues.

Extraction and isolation of DNA from host cells is a cornerstone of modem molecular biology. One type of DNA, bacterial plasmid DNA has been particularly useful as a convenient vector for the insertion of genetic material into bacterial, yeast and mammalian cells. DNA isolated from an organism is inserted by being contiguously and covalently linked to plasmid DNA and is then introduced into a cell, such as a bacterial cell, and allowed to multiply, thereby creating large copy numbers of the plasmid in each cell. These plasmids may advantageously be harvested to provide a sufficient amount of DNA (typically on the order of several micrograms, although up to milligram quantities can be produced on an industrial scale) for a variety of experimental or therapeutic purposes. The harvesting of plasmid DNA, defined as its removal from cells and isolation from the genomic DNA content of the cells, has growing utility in life sciences research, diagnostics, therapeutics and other applications.

Currently, the extraction and isolation of DNA is either performed manually or through the use of robotic sample preparation stations. In either case, a variety of technologies and materials are used (*see, for example,* QIAamp DNA Mini Kit and QIAamp DNA Blood Mini Kit Handbook, 1999, Qiagen GmbH, Max-Volmer-Strasse 4, 40724 Hildren, Germany; Bimboim & Doly, 1979, Nucl. Acids Res. 7: 1513-1522). Typically, cells are first incubated in a surfactant (detergent) solution, in some cases containing protein digesting enzymes such as Protease or Proteinase K. These lyse the cells, thereby releasing the DNA into solution. This is frequently performed under alkaline conditions, to destabilize nucleases and hydrolyze contaminating RNA. The DNA must then be separated from other cell constituents, which is performed using a number of different separation protocols, including, for example, selective precipitation of proteins and other cell debris, organic chemical extraction (using phenol and chloroform), and DNA affinity column chromatography. Plasmid DNA must also be isolated from contaminating cellular (bacterial genomic DNA). Filtration methods can produce a plasmid DNA solution, but the solutions required to solvate DNA are usually inappropriate for the desired final application of the DNA. As a consequence, plasmid DNA is removed from these solutions by ethanol precipitation, or solid-phase separation is used, which often requires further changes in solvent pH and salt concentration (especially for affinity binding methods using glass or silica). The technologies required for these steps include pipetting, pumping, filtration, washing, and centrifugation, requiring an expensive suite of devices and skilled operators thereof. The additional requirements of automated systems include sample transfer and robotics for the handling of sample containers.

This discussion illustrates the need in the art for more efficient, rapid, inexpensive automated methods and devices for performing DNA sample preparation, particularly plasmid DNA preparation.

In the field of integrated genetic analysis, some progress has been made in the integration of sample preparation, PCR, and detection via real-time fluorescence or hybridization methods (Anderson et al., 1998, "Advances in Integrated Genetic Analysis," in Proc. Micro Total Analysis '98, Harrison & van den Berg, eds., Kluwer: Amsterdam, pp.11-16). These systems rely on macroscopic fluid handling systems such as pumps and valves that must be interfaced with the microfluidic devices within which fluids are processed.

However, there exists a need for devices and methods capable of processing cell cultures for harvesting DNA, particularly plasmid DNA.

In the biological and biochemical arts, analytical procedures frequently require incubation of biological samples and reaction mixtures at temperatures greater than ambient temperature. Moreover, many bioanalytical and biosynthetic techniques require incubation at more than one temperature, either sequentially or over the course of a reaction scheme or protocol.

One example of such a bioanalytical reaction is the polymerase chain reaction. The polymerase chain reaction (PCR) is a technique that permits amplification and detection of nucleic acid sequences. *See* U.S. Patent Nos. 4,683,195 to Mullis et al. and 4,683,202 to Mullis. This technique has a wide variety of biological applications, including for example, DNA sequence analysis, probe generation, cloning of nucleic acid sequences, site-directed mutagenesis, detection of genetic mutations, diagnoses of viral infections, molecular "fingerprinting," and the monitoring of contaminating microorganisms in biological fluids and other sources. The polymerase chain reaction comprises repeated rounds, or cycles, of target denaturation, primer annealing, and polymerase-mediated extension; the reaction process yields an exponential amplification of a specific target sequence.

Methods for miniaturizing and automating PCR are desirable in a wide variety of analytical contexts, particularly under conditions where a large multiplicity of samples must be analyzed simultaneously or when there is a small amount of sample to be analyzed.

In addition to PCR, other *in vitro* amplification procedures, including ligase chain reaction as disclosed in U.S.

Patent 4,988,617 to Landegren and Hood, are known and advantageously used in the prior art. More generally, several important methods known in the biotechnology arts, such as nucleic acid hybridization and sequencing, are dependent upon changing the temperature of solutions containing sample molecules in a controlled fashion. Automation and miniaturization of the performance of these methods are desirable goals in the art.

Mechanical and automated fluid handling systems and instruments produced to perform automated PCR have been disclosed in the prior art.

U.S. Patent 5,304,487, issued April 19, 1994 to Wilding et al. teach fluid handling on microscale analytical devices.

International Application, Publication No. W0 93/22053, published 11 November 1993 to University of Pennsylvania discloses microfabricated detection structures.

International Application, Publication No. W0 93/22058, published 11 November 1993 to University of Pennsylvania discloses microfabricated structures for performing polynucleotide amplification.

Wilding et al., 1994,Clin. Chem. 40: 43-47 disclose manipulation of fluids on straight channels micromachined into silicon.

Kopp et al., 1998, Science 280: 1046 disclose microchips for performing *in vitro* amplification reactions using alternating regions of different temperature.

One drawback of the synthetic microchips disclosed in the prior art for performing PCR and other temperature-dependent bioanalytic reactions has been the difficulty in designing systems for moving fluids on the microchips through channels and reservoirs having diameters in the 10-100 $\mu$m range. This is due in part to the need for high-pressure pumping means for moving fluid through the small sizes of the components of these microchips. These disabilities of the prior art microchips limits the usefulness of these devices for miniaturizing and automating PCR and other bioanalytic processes.

Thus, there exists a need in the art for devices and methods that provide integrated sample preparation and analysis, particularly of DNA samples. This need is particularly acute for high throughput analyses, which are currently burdened by the high costs and complexity of automated, typically robotic, systems. Integration of DNA sample preparation and analysis would be particularly useful if it reduced the current need in the art for need for multiple, complex technologies that demand highly-skilled operators. Importantly, for DNA analysis integration of sample preparation and in vitro amplification methods would minimize the possibility of contamination and sample carry-over, which is particularly important in high sensitivity techniques such as various *in vitro* amplification reactions used in the art.

Some of the present inventors have developed a microsystem platform and a micromanipulation device to manipulate said platform by rotation, thereby utilizing the centripetal forces resulting from rotation of the platform to motivate fluid movement through microchannels embedded in the microplatform, as disclosed in the international publication WO 98/53311. Beside methods and apparatus for performing microanalytic and microsynthetic analyses and procedures, heat-activated sacrificial valves are disclosed that are opened by melting a heat sensitive material, which separates two fluidic components of the platform's microfluidics array. The microsystem platform and micromanipulation device is also disclosed in co-owned U.S. Patent No. 6,063,589, issued May 16, 2000, and co-owned and co-pending patent applications U.S. Serial Nos. 08/761,063, filed December 5, 1996; 08/768,990, filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000 and granted as US 6,582,662 B1.

## SUMMARY OF THE INVENTION

This invention provides microsystems platforms as disclosed in co-owned U.S. Patent No. 6,063,589, issued May 16, 2000, and co-owned and co-pending patent applications U.S. Serial Nos. 08/761,063, filed December 5, 1996; 08/768,990, filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000.

The invention in its broadest form provides an apparatus according to claim 1 for performing microscale processes on a microplatform, whereby fluid is moved on the platform in defined channels motivated by centripetal force arising from rotation of the platform. Preferred embodiments are described by the dependent claims. The microsystems platform is provided to perform integrated and miniaturized sample preparation, nucleic acid amplification, and nucleic acid detection assays. A first element of the apparatus of the invention is a microplatform that is a rotatable structure, most preferably a disk, the disk comprising fluid (sample) inlet ports, fluidic microchannels, reagent reservoirs, collection chambers, detection chambers and sample outlet ports, generically termed "microfluidic structures". The disk is rotated at speeds from about 1 to about 30,000 rpm for generating centripetal acceleration that enables fluid movement through the microfluidic structures of the platform. The disks in this embodiment of the invention also preferably comprise air outlet ports and air displacement channels. The air outlet ports and in particular the air displacement ports provide a means for fluids to displace air, thus ensuring uninhibited movement of fluids on the disk. At least one temperature control element is provided for raising the temperature of fluids contained the microfluidic structures to temperatures greater than ambient temperatures. Specific sites on the disk also preferably comprise elements that allow fluids to be analyzed.

A preferred embodiment of the platforms of the invention is a platen that rotates with the microfluidics disk. The platen is most preferably a printed circuit board comprising resistive heating elements, thermoelectric (Peltier) elements, temperature sensors, assay optics and microprocessor and other electronic components. Electrical communication between a rotating platen and stationary power sources, motor controllers, temperature controllers, and computers is most preferably accomplished through a slip-ring assembly. By mounting the microfluidic disk on the platen and rotating both disk and platen together, the distribution and flow rate of fluid throughout the microfluidic structures as well as the temperature of fluid within localized regions of the microfluidics disk can be controlled.

In a preferred embodiment, one face of the microfluidics disk is mounted onto a face of the platen and the temperature of fluids at particular positions within the microfluidics disk is controlled through temperature exchange between the platen and disk. In alternative embodiments, a microfluidic disk is positioned between two platens, each comprising elements that effect temperature exchange between the disk and thermal regulation elements comprising the platens. In a preferred embodiment, the platen is a printed circuit board with resistive heating elements, Peltier elements and temperature sensors embedded therein or affixed thereto. In an alternative embodiment, thermal regulation within the microfluidic disk is achieved by permanently bonding a layer comprising resistive heaters directly to the disk; in this case, fluids within the disk are heated to temperatures greater than ambient temperature with resistive heating elements and cooled to temperatures above or equal to ambient temperature by spinning the disk and through the loss of heat to the environment. As with the platen, electrical communication between this composite disk and power supplies, temperature controllers and computers is most preferably accomplished through a slip-ring assembly.

In one embodiment, the present invention provides devices for the performance of integrated and miniaturized sample preparation for the extraction, isolation, and purification of DNA from cells. In preferred embodiments, the devices of the invention are particularly provided to isolate plasmid DNA from bacterial cells.

The plasmid DNA sample preparation platforms in an embodiment of the invention are provided to perform the following functions: sample processing to free DNA from the bacterial cell; filtration of the resultant solution to remove bacterial cell fragments; application of the solution to a binding matrix using solvent conditions that promote DNA binding to the matrix; washing of bound DNA and replacement of the original solution by a solution that is compatible with further analytical methods; and elution of the DNA from the binding matrix in a suitable solvent. The DNA thus eluted can be isolated, amplified *in vitro* or sequenced using methods known in the art.

The platforms of the invention may be provided comprising microfluidic structures that perform plasmid DNA sample preparation as described in further detail below. These microstructures are illustrated for clarity with regard to a single microstructure. However, platforms comprising a multiplicity of such plasmid DNA preparation microfluidic structures may be provided by the invention, wherein the microfluidics structures are arrayed on the surface of the platform with a density determined by the size of the platform and the volumetric capacity of the chambers and reservoirs comprising the microfluidic structures as disclosed herein.

In a second embodiment, the invention is provided having microfluidics structures as described herein for performing an integrated suite of biochemical processes for accomplishing *in vitro* amplification reactions. These include sample processing to isolate DNA from bacterial or mammalian cells; sample conditioning to adjust the solution conditions to those appropriate for PCR; mixing of the conditioned sample with PCR reagents, including deoxyribosenuclotides, polymerase enzyme, primers, and appropriate salts, buffers and additives; and thermal cycling to effect PCR.

In certain preferred embodiments, the disks of the invention are provided with a multiplicity of microfluidics structures that enable to platform to process and amplify several samples simultaneously. In these embodiments, multiple copies of an arrangement of microfluidics structures for performing the biochemical reaction suite are arrayed on the disk, and sample input ports or reservoirs provided for each copy, thereby permitting processing of multiple samples. In addition, the portion of the sample DNA to be amplified can be independently, by the choice of amplification primers provided in each of the individual copies of the microfluidics structures arrayed on the disk, thereby permitting amplification "multiplexing" of a particular sample. Alternatively, the same primers can be provided to process in parallel multiple samples for amplification of the same target fragment in the DNA of each sample. Independent thermal cycling profiles, including the temperature used for each step of the amplification cycle, temperature ramp-rates, and hold times, may be individually programmed into the instrument for each of the microfluidics structures or for each of the samples processed.

In a preferred embodiment, the invention advantageously permits simultaneous, independent thermal cycling of a multiplicity of different samples, independent amplification of different target fragments from a particular sample, or both. This feature also enables a user to optimize thermal cycling parameters for a single sample or amplicon quickly and in a single experiment, by varying reaction parameters on a plurality of the microfluidics structures arrayed in the disk, thereby simultaneously performing multiple experiments simultaneously. Since particular copies of the microfluidics structures can be arranged in microfluidic isolation from other copies on the platform, portions comprising less than all of the microfluidics structures can be discretely used and the remainder retained for future use.

In alternative embodiments of the platforms of the invention, metering structures as disclosed in co-owned U.S. Patent 6,063,589, issued May 16, 2000, are used to distribute aliquots of reagent to each of a multiplicity of mixing structures, each mixing structure being fluidly connected to one of a multiplicity of sample reservoirs, thereby permitting parallel processing and mixing of the samples with a common reagent. This reduces the need for automated reagent distribution mechanisms, reduces the amount of time required for reagent dispensing (that can be performed in parallel with distribution of reagent to a multiplicity of reaction chambers), and permits delivery of small (nL-to-μL) volumes without using externally-applied electromotive means.

The assembly of a multiplicity of collection chambers on the platforms of the invention also permits simplified detectors to be used, whereby each individual collection/detection chamber can be scanned using mechanisms well-developed in the art for use with, *for example,* CD-ROM technology. Finally, the platforms of the invention are advantageously provided with sample and preferably reagent entry ports for filling with samples and reagents, respectively, that can be adapted to liquid delivery means known in the art (such as micropipettors).

The disks of this invention have several advantages over those that exist in the centrifugal analyzer art. Foremost is the fact that flow is laminar due to the small dimensions of the fluid channels; this allows for better control of processes such as mixing and washing. Secondly, the small dimensions conferred by microfabrication enable the use of "passive" valving, dependent upon capillary forces, over much wider range of rotational velocities and with greater reliability than in more macroscopic systems. To this are added the already described advantages of miniaturization.

The present invention solves problems in the current art through the use of a microfluidic disk in which centripetal acceleration is used to move fluids. It is an advantage of the microfluidics platforms of the present invention that the fluid-containing components are constructed to contain a small volume, thus reducing reagent costs, reaction times and the amount of biological material required to perform an assay. It is also an advantage that the fluid-containing components are sealed, thus eliminating experimental error due to differential evaporation of different fluids and the resulting changes in reagent concentration. Because the microfluidic devices of the invention are completely enclosed, both evaporation and optical distortion are reduced to negligible levels. The platforms of the invention also advantageously permit "passive" mixing and valving, *i.e.*, mixing and valving are performed as a consequence of the structural arrangements of the components on the platforms (such as shape, length, position on the platform surface relative to the axis of rotation, and surface properties of the interior surfaces of the components, such as wettability as discussed below), and the dynamics of platform rotation (speed, acceleration, direction and change-of-direction), and permit control of assay timing and reagent delivery.

The devices of the invention also implement simpler, more robust, and more economical sample preparation for performing *in vitro* amplification reactions such as PCR. All mechanical aspects of sample processing are carried out using a single motor that rotates the disc at prescribed velocities, thereby driving fluids on the disc through microchannels and other microfluidics structures. This is advantageous over current sample preparation methods involving robotic pipetting stations or other fluid transfer mechanisms, automation for the delivery of processing plates to different "stations," or both.

The invention advantageously integrates sample preparation with thermal cycling for PCR, thereby eliminating additional fluid transfer steps. This minimizes the potential for contamination or fluid loss.

The need for precise metering of delivered fluids may be relaxed through the use of on-disc metering structures, as described more fully in co-owned U.S. Patent No. 6,063,589, issued May 16, 2000, and co-owned and co-pending patent applications U.S. Serial Nos. 08/761.063, filed December 5, 1996; 08/768,990, filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000 and granted as US 6,582,662 B1. By loading imprecise volumes, slightly in excess of those needed for the assay, and allowing the rotation of the disk and use of appropriate microfluidic structures to meter the fluids, much simpler (and less expensive) fluid delivery technology may be employed than is the conventionally required for high-density microtitre plate assays.

Second, the total number of fluid "delivery" events on the microfluidic platform may be reduced relative to microtiter plates. By using microfluidic structures that sub-divide and aliquot common reagents (such as reagent solutions, buffers, and enzyme substrates) used in all assays performed on the platform, the number of manual or automated pipetting steps may be reduced by at least half (depending on the complexity of the assay). A reduction in fluid transfers to the device can reduce total assay time. Examples of these structures have been disclosed in co-owned U.S. Patent 6,063,589, issued May 16, 2000.

Embodiments of the invention may also provide on-platform means for mixing reagents with sample and washing the resulting reaction products, removing the need for transferring the assay collection chamber(s) to a separate "wash" station. This also reduces manipulation of the assay device as well as providing controlled and integrated fluid processing.

The system is simple and easy to use, robust because it is not dependent on operator variability. In addition, the platforms and systems disclosed are self-contained and integrated, thereby minimizing both operator handling and error.

Certain preferred embodiments of the apparatus of the invention are described in greater detail in the following sections of this application and in the drawings.

## BRIEF DESCRIPTION OF THE DRAWINGS

Figure 1 depicts an exploded, oblique view of a microsystems platform of the invention.
Figure 2 depicts a plan view of one component of the microsystems platform shown in exploded, oblique view in Figure 1, the microfluidics layer:
Figure 3 is a detail of a section of the microfluidics layer illustrated in Figure 2.
Figure 4 shows a detail of a region of the structure illustrated in Figure 3.
Figure 5 is a cross-sectional view of the microsystems platform of Figure 1 in the vicinity of the thermal cycling chamber.
Figure 6 depicts an explode, oblique view of a microfluidics disc and a printed circuit.
Figure 7 illustrates a plan view of the microfluidics disc shown in Figure 6.
Figure 8 illustrates the velocity profile, rotational rate (rpm) vs. time, used to effect fluid motion through the microsystems platform in Examples 1 and 2.
Figure 9 illustrates the sequence of fluid motions motivated by the velocity profile of Figure 8.

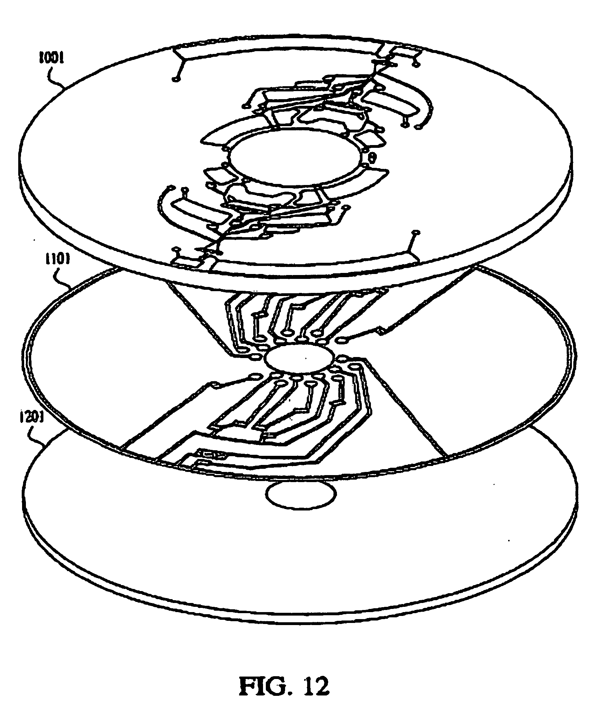

Figure 12 depicts an exploded, oblique view of the DNA sample preparation disk.

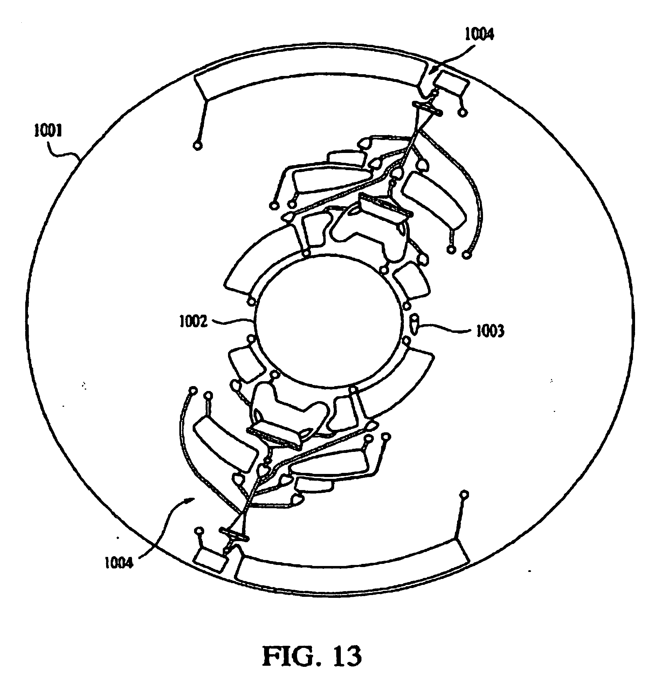

Figure 13 is a plan view of this disk shown in Figure 12.
Figure 14 depicts a plan view of the microfluidics structure for a plasmid DNA preparation platform.
Figure 15 depicts a plan view of the heating layer for a plasmid DNA preparation platform.
Figure 16 depicts a plan view of a base layer for a plasmid DNA preparation platform.
Figures 17A through 17K illustrates fluid movement through the microfluidics structure for a plasmid DNA preparation platform.
Figure 20 is a cross-sectional view diagram of the electric platen and controlling elements of the invention.
Figure 21 is a plan view diagram of the temperature control elements on an electric platen of the invention.
Figure 22 is a plan view diagram of the electrical contacts between the electrical leads on the printed circuit board of the platen and temperature control elements.
Figure 23 is a cross-sectional view of the structure of a temperature control element comprising a Peltier element according to the invention.
Figure 24 depicts a plan view of the electric circuit layer shown in Figure 6.
Figure 25 shows a cross-sectional view on the disk shown in Figure 6.
Figure 26 is a photograph of gel electrophoretic analysis of amplified DNA target from an E. coli sample using the disk pictured in Figure 6.

## DETAILED DESCRIPTION OF PREFERRED EMBODIMENTS

Microplatforms and a micromanipulation devices are disclosed in co-owned U.S. Patent No. 6,063,589, issued May 16, 2000, and co-owned and co-pending patent applications U.S. Serial Nos. 08/761,063, filed December 5, 1996; 08/768,990, filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000 and granted as US 6,582,662 B1, adapted for performing microanalytical and microsynthetic assays of biological samples.

For the purposes of this invention, the term "sample" will be understood to encompass any fluid, solution or mixture, either isolated or detected as a constituent of a more complex mixture, or synthesized from precursor species. In particular, the term "sample" will be understood to encompass any biological species of interest. The term "biological sample" or "biological fluid sample" will be understood to mean any biologically-derived sample, including but not limited to blood, plasma, serum, lymph, saliva, tears, cerebrospinal fluid, urine, sweat, plant and vegetable extracts, semen, and ascites fluid.

For the purposes of this invention, the term "a centripetally motivated fluid micromanipulation apparatus" is intended to include analytical centrifuges and rotors, microscale centrifugal separation apparatuses, and most particularly the microsystems platforms and disk handling apparatuses as described in co-owned U.S. Patent No. 6,063,589, issued May 16, 2000, and co-owned and co-pending patent applications U.S. Serial Nos. 08/761,063, filed December 5, 1996; 08/768,990, filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000 and granted as US 6,582,662 B1.

For the purposes of this invention, the term "microsystems platform" is intended to include centripetally-motivated microfluidics arrays as described in co-owned U.S. Patent No. 6,063,589, issued May 16, 2000, and co-owned and co-pending patent applications U.S. Serial Nos. 08/761,063, filed December 5, 1996; 08/768.990. filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000 and granted as US 6,582,662 B1.

For the purposes of this invention, the terms "capillary", "microcapillary" and "microchannel" will be understood to be interchangeable and to be constructed of either wetting or non-wetting materials where appropriate.

For the purposes of this invention, the term "reagent reservoir," "assay chamber," "fluid holding chamber," "collection chamber" and "detection chamber" will be understood to mean a defined volume on a microsystems platform of the invention comprising a fluid. The volumetric capacity of these structures as provided herein is from about 2nL to about 1000μL.

For the purposes of this invention, the terms "entry port" and "fluid input port" will be understood to mean an opening on a microsystems platform of the invention comprising a means for applying a fluid to the platform.

For the purposes of this invention, the terms "exit port" and "fluid outlet port" will be understood to mean a defined volume on a microsystems platform of the invention comprising a means for removing a fluid from the platform.

For the purposes of this invention, the term "capillary junction" will be understood to mean a region in a capillary or other flow path where surface or capillary forces are exploited to retard or promote fluid flow. A capillary junction is provided as a pocket, depression or chamber in a hydrophilic substrate that has a greater depth (vertically within the platform layer) and/ or a greater width (horizontally within the platform layer) that the fluidics component (such as a microchannel) to which it is fluidly connected. For liquids having a contact angle less than 90° (such as aqueous solutions on platforms made with most plastics, glass and silica), flow is impeded as the channel cross-section increases at the interface of the capillary junction. The force hindering flow is produced by capillary pressure, that is inversely proportional to the cross sectional dimensions of the channel and directly proportional to the surface tension of the liquid, multiplied by the cosine of the contact angle of the fluid in contact with the material comprising the channel. The factors relating to capillarity in microchannels according to this invention have been discussed in co-owned U.S. Patent No. 6,063,589, issued May 12, 2000 and in co-owned and co-pending U.S. patent application, Serial No. 08/910,726, filed August 12, 1997.

Capillary junctions can be constructed in at least three ways. In one embodiment, a capillary junction is formed at the junction of two components wherein one or both of the lateral dimensions of one component is larger than the lateral dimension(s) of the other component. As an example, in microfluidics components made from "wetting" or "wettable" materials, such a junction occurs at an enlargement of a capillary as described in co-owned U.S. Serial Nos. U.S. Serial Nos. 08/761,063, filed December 5, 1996; 08/768,990, filed December 18, 1996; and 08/910,726, filed August 12, 1997. Fluid flow through capillaries is inhibited at such junctions. At junctions of components made from non-wetting or non-wettable materials, on the other hand, a constriction in the fluid path, such as the exit from a chamber or reservoir into a capillary, produces a capillary junction that inhibits flow. In general, it will be understood that capillary junctions are formed when the dimensions of the components change from a small diameter (such as a capillary) to a larger diameter (such as a chamber) in wetting systems, in contrast to non-wettable systems, where capillary junctions form when the dimensions of the components change from a larger diameter (such as a chamber) to a small diameter (such as a capillary).

A second embodiment of a capillary junction is formed using a component having differential surface treatment of a capillary or flow-path. For example, a channel that is hydrophilic (that is, wettable) may be treated to have discrete regions of hydrophobicity (that is, non-wettable). A fluid flowing through such a channel will do so through the hydrophilic areas, while flow will be impeded as the fluid-vapor meniscus impinges upon the hydrophobic zone.

The third embodiment of a capillary junction is provided for components having changes in both lateral dimension and surface properties. An example of such a junction is a microchannel opening into a hydrophobic component (microchannel or reservoir) having a larger lateral dimension. Those of ordinary skill will appreciate how capillary junctions according to the invention can be created at the juncture of components having different sizes in their lateral dimensions, different hydrophilic properties, or both.

For the purposes of this invention, the term "capillary action" will be understood to mean fluid flow in the absence of rotational motion or centripetal force applied to a fluid on a rotor or platform of the invention and is due to a partially or completely wettable surface.

For the purposes of this invention, the term "capillary microvalve" will be understood to mean a capillary microchannel comprising a capillary junction whereby fluid flow is impeded and can be motivated by the application of pressure on a fluid, typically by centripetal force created by rotation of the rotor or platform of the invention. Capillary microvalves will be understood to comprise capillary junctions that can be overcome by increasing the hydrodynamic pressure on the fluid at the junction, most preferably by increasing the rotational speed of the platform.

For the purposes of this invention, the term "sacrificial valve" will be understood to mean a valve preferably made of a fungible material that can be removed from the fluid flow path. In preferred embodiments, said sacrificial valves are wax valves and are removed from the fluid flow path by heating, using any of a variety of heating means including infrared illumination and most preferably by activation of heating elements on or embedded in the platform surface as described in co-owned U.S. Patent No. 6,063,589.

For the purposes of this invention, the term "in fluid communication" or "fluidly connected" is intended to define components that are operably interconnected to allow fluid flow between components. In preferred embodiments, the platform preferably comprises a disk, whereby fluid movement on the disk is motivated by centripetal force upon rotation of the disk.

For the purposes of this invention, the term "air displacement channels" will be understood to include ports in the surface of the platform that arc contiguous with the components (such as microchannels, chambers and reservoirs) on the platform, and that comprise vents and microchannels that permit displacement of air from components of the platforms and rotors by fluid movement.

The microplatforms of the invention (preferably and hereinafter collectively referred to as "disks"; for the purposes of this invention, the terms "microplatform", "microsystems platform" and "disk" are considered to be interchangeable) are provided to comprise one or a multiplicity of microsynthetic or microanalytic systems (termed "microfluidics structures" herein). Such microfluidics structures in turn comprise combinations of related components as described in further detail herein that are operably interconnected to allow fluid flow between components upon rotation of the disk. These components can be microfabricated as described below either integral to the disk or as modules attached to, placed upon, in contact with or embedded in the disk. For the purposes of this invention, the term "microfabricated" refers to processes that allow production of these structures on the sub-millimeter scale. These processes include but are not restricted to molding, photolithography, etching, stamping and other means that are familiar to those skilled in the art.

Micromanipulation devices may be provided for manipulating the disks of the invention, wherein the disk is rotated within the device to provide centripetal force to effect fluid flow on the disk. Accordingly, the device provides means for rotating the disk at a controlled rotational velocity, for stopping and starting disk rotation, and advantageously for changing the direction of rotation of the disk. Both electromechanical means and control means, as further described herein, may be provided as components of the devices of the invention. User interface means (such as a keypad and a display) are also provided, as further described in co-owned U.S. Patent No. 6,063,589, issued May 16, 2000, and co-owned and co-pending patent applications U.S. Serial Nos. 08/761,063, filed December 5, 1996; 08/768,990, filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000 and granted as US 6,582,662, B1.

Temperature control elements are provided to control the temperature of the platform during incubation of a fluid thereupon. The invention may therefore provide heating elements, including heat lamps, direct laser heaters, Peltier heat pumps, resistive heaters, ultrasonication heaters and microwave excitation heaters, and cooling elements, including Peltier devices and heat sinks, radiative heat fins and other components to facilitate radiative heat loss. Thermal devices are preferably arrayed to control the temperature of the platform over a specific area or multiplicity of areas. Preferably, heating and cooling elements comprise the platforms of the invention comprising a thermal regulation layer in the platform surface that is in thermal contact with the microfluidics components, most preferably microchannels as described herein. The temperature of any particular area on the platform (preferably, the microchannels at any particular thermally regulated area) is monitored by resistive temperature devices (RTD), thermistors, liquid crystal birefringence sensors or by infrared interrogation using IR-specific detectors, and can be regulated by feedback control systems. Temperature control on the microsystems platforms of this invention is most preferably achieved using the methods and devices disclosed in co-owned U.S. Patent No. 6,063,589.

In preferred embodiments, portions of the microsystems platform surface are adapted for providing regions of controlled temperature (termed "thermal regions" or "thermal arrays" herein) using integral heating elements as disclosed in U.S. Patent 6,063,589. In more preferred embodiments, the portions of the microsystems platform surface are constituted in arrays of thermal control elements, most preferably wherein is produced adjacent regions of the platform surface having different temperatures. In preferred embodiments, the platform also comprises other components as disclosed in co-owned and co-pending patent applications U.S. Serial Nos. 08/761,063, filed December 5, 1996; 08/768,990, filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000 and granted as US 6,582,662 B1, most preferably channels and microchannels, whereby fluid flow traverses each of the different regions having different temperatures at least once, or more preferably, several times. In these embodiments, the amount of time fluid is within any particular thermal region, and thus at any particular temperature is dependent on the path length of the channel in the region, the square of the hydraulic diameter of the channel, and the square of the rotational speed of the platform. In preferred embodiments, the arrays comprise at least 2 or 3 regions of different temperature adjacent to one another. In certain embodiments, the thermal regions are rectangular in shape, while in other embodiments the thermal regions are wedge-shaped, having a broader annular diameter at positions distal to the axis of rotation than at positions proximal to the axis of rotation.

In preferred embodiments of the platforms of the invention, the thermal arrays and regions of elevated temperatures constructed in the surface of the platforms of the invention comprise a thermal heating element. In preferred embodiments, the thermal heating element is a resistive heater element or a thermofoil heater, which is an etched-foil heating element enclosed in an electrically insulating plastic (Kapton, obtained from Minco). Resistive heater elements comprising the platforms of the invention are as described in co-owned U.S. Patent 6,063,587. Briefly, said resistive heater elements comprise in combination an electrically inert substrate capable of being screen printed with a conductive ink and a resistive ink; a conductive ink screen-printed in a pattern; and a resistive ink screen-printed in a pattern over the conductive ink pattern wherein the resistive ink in electrical contact with the conductive ink and wherein an electrical potential applied across the conductive ink causes current to flow across the resistive ink wherein the resistive ink produces heat. Such structures are defined as "electrically-resistive patches" herein. Preferably, the conductive ink is a silver conductive ink such as Dupont 5028, Dupont 5025, Acheson 423SS, Acheson 426SS and Acheson SS24890, and the resistive ink is, for example, Dupont 7082; Dupont 7102, Dupont 7271, Dupont 7278 or Dupont 7285, or a PTC (positive temperature coefficient) ink. In alternative embodiments, the resistive heater element can further comprise a dielectric ink screen-printed over the resistive ink pattern and conductive ink pattern.

One embodiment of the invention provides a combination of specifically adapted microplatforms that are rotatable, analytic/synthetic microvolume assay platforms, and a micromanipulation device for manipulating the platform to achieve fluid movement on the platform arising from centripetal force on the platform as result of rotation. The platform of the invention is preferably and advantageously a circular disk; however, any platform capable of being rotated to impart centripetal for a fluid on the platform is intended to fall within the scope of the invention. The micromanipulation devices which may be used with the invention are more fully described in co-owned and co-pcnding U.S. Serial Nos. U.S. Serial Nos. 08/761,063, filed December 5, 1996; 08/768,990, filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000 and granted as US 6,582,662 B1.

Fluid (including reagents, samples and other liquid components) movement is controlled by centripetal acceleration due to rotation of the platform. The magnitude of centripetal acceleration required for fluid to flow at a rate and under a pressure appropriate for a particular microfluidics structure on the microsystems platform is determined by factors including but not limited to the effective radius of the platform, the interior diameter of microchannels, the position angle of the microchannels on the platform with respect to the direction of rotation, and the speed of rotation of the platform. In certain methods, an unmetered amount of a fluid (either a sample or reagent solution) is applied to the platform and a metered amount is transferred from a fluid reservoir to a microchannel, as described in co-owned U.S. Patent No. 6,063,589, issued May 16, 2000, and co-owned and co-pending patent applications U.S. Serial Nos. 08/761,063, filed December 5, 1996; 08/768,990, filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000 and granted as US 6,582,662 B1. In preferred embodiments, the metered amount of the fluid sample provided on an inventive platform is from about 1nL to about 500$\mu$L. In these embodiments, metering manifolds comprising one or a multiplicity of metering capillaries are provided to distribute the fluid to a plurality of components of the microfluidics structure.

Microchannel sizes are optimally determined by specific applications and by the amount of and delivery rates of fluids required for each particular embodiment of the platforms of the invention. Microchannel sizes can range from 0.1 $\mu$m to a value close to the thickness of the disk (*e.g.*, about 1mm); in preferred embodiments, the interior dimension of the microchannel is from 0.5$\mu$m to about 500$\mu$m. Microchannel and reservoir shapes can be trapezoid, circular or other geometric shapes as required. Microchannels preferably are embedded in a microsystem platform having a thickness of about 0.1 to 25mm, wherein the cross-sectional dimension of the microchannels across the thickness dimension of the platform is less than 1mm, and can be from 1 to 90 percent of said cross-sectional dimension of the platform. Sample reservoirs, reagent reservoirs, reaction chambers, collection chambers, detections chambers and sample inlet and outlet ports preferably are embedded in a microsystem platform having a thickness of about 0.1 to 25mm, wherein the cross-sectional dimension of the microchannels across the thickness dimension of the platform is from 1 to 75 percent of said cross-sectional dimension of the platform. In preferred embodiments, delivery of fluids through such channels is achieved by the coincident rotation of the platform for a time and at a rotational velocity sufficient to motivate fluid movement between the desired components.

Input and output (entry and exit) ports are components of the microplatforms of the invention that are used for the introduction or removal of fluid components. Entry ports are provided to allow samples and reagents to be placed on or injected onto the disk; these types of ports are generally located towards the center of the disk. Exit ports are also provided to allow products to be removed from the disk. Port shape and design vary according specific applications. For example, sample input ports may be designed, inter alia, to allow capillary action to efficiently draw the sample into the disk. In addition, ports can be configured to enable automated sample/reagent loading or product removal. Entry and exit ports are most advantageously provided in arrays, whereby multiple samples are applied to the disk or to effect product removal from the microplatform.

In some embodiments of the platforms of the invention, the inlet and outlet ports are adapted to the use of manual pipettors and other means of delivering fluids to the reservoirs of the platform. In alternative, advantageous embodiments, the platform is adapted to the use of automated fluid loading devices. One example of such an automated device is a single pipette head located on a robotic arm that moves in a direction radially along the surface of the platform. In this embodiment, the platform could be indexed upon the spindle of the rotary motor in the azimuthal direction beneath the pipette head, which would travel in the radial direction to address the appropriate reservoir.

Air handling systems on the disk may be included and are air displacement channels, whereby the movement of fluids displaces air through channels that connect to the fluid-containing microchannels retrograde to the direction of movement of the fluid, thereby providing a positive pressure to further motivate movement of the fluid.

Platforms of the invention such as disks and the microfluidics components comprising such platforms are advantageously provided having a variety of composition and surface coatings appropriate for particular applications. Platform composition will be a function of structural requirements, manufacturing processes, and reagent compatibility/ chemical resistance properties. Specifically, platforms are provided that are made from inorganic crystalline or amorphous materials, *e.g.* silicon, silica, quartz, inert metals, or from organic materials such as plastics, for example, poly(methyl methacrylate) (PMMA), acetonitrile-butadiene-styrene (ABS), polycarbonate, polyethylene, polystyrene, polyolefins, polypropylene and metallocene. These may be used with unmodified or modified surfaces as described below. The platforms may also be made from thermoset materials such as polyurethane and poly(dimethyl siloxane) (PDMS). Also provided by the invention are platforms made of composites or combinations of these materials; for example, platforms manufactures of a plastic material having embedded therein an optically transparent glass surface comprising the detection chamber of the platform. Alternately, platforms composed of layers made from different materials may be made. The surface properties of these materials may be modified for specific applications, as disclosed in co-owned U.S. Patent No. 6,063,589, issued May 16, 2000, and co-owned and co-pending patent applications U.S. Serial Nos. 08/761,063, filed December 5, 1996; 08/768,990, filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000 and granted as US 6,582,662 B1.

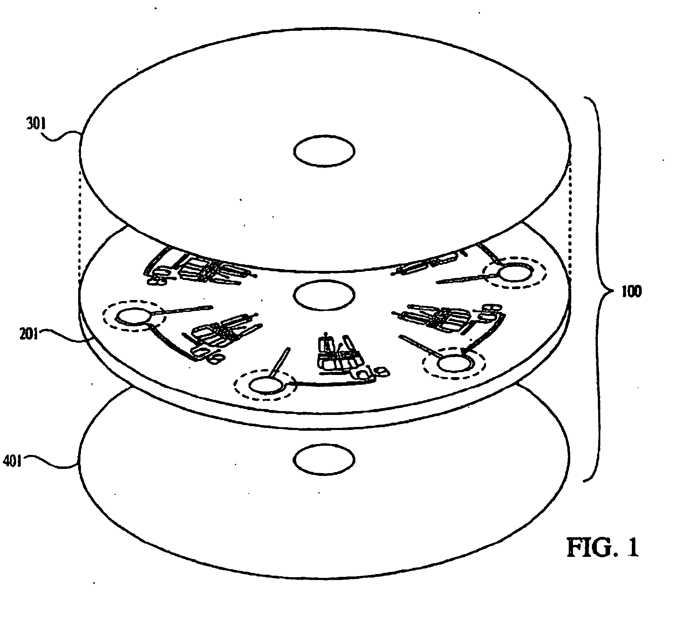

Preferably, the disk incorporates microfabricated mechanical, optical, and fluidic control components on platforms made from, for example, plastic, silica, quartz, metal or ceramic. These structures are constructed on a submillimeter scale by molding, photolithography, etching, stamping or other appropriate means, as described in more detail below. It will also be recognized that platforms comprising a multiplicity of the microfluidics structures are also encompassed by the invention, wherein individual combinations of microfluidics and reservoirs, or such reservoirs shared in common, are provided fluidly connected thereto. An example of such a platform is shown in Figure 1.

**Platform Manufacture and Assembly**

Microfluidics structures are provided embedded in a substrate comprising the microsystems platform of the invention. The platform is preferably manufactured and assembled as layers containing separate components that arc bonded together. As illustrated in Figure 1, the exemplified embodiment of the platforms of the invention comprise two layers, a reservoir layer and a microfluidics layer. Platforms having additional layers are also within the scope of the invention.

The reservoir layer of the platform is manufactured from a thermoplastic material such as acrylic, polystyrene, polycarbonate, or polyethylene. For such materials, fabrication methods include machining and conventional injection molding. For injection molding, the mold inserts that are used to define the features of the platform can be created using standard methods of machining, electrical discharge machining, and other means known in the art.

The reservoir layer of the platform can also be manufactured from a thermoset material or other material that exists in a liquid form until subjected to heat, radiation, or other energy sources. Examples of thermoset materials include poly(dimethyl siloxane) (PDMS), polyurethane, or epoxy. Typically, these materials are obtained from the manufacturer in two parts; the two parts are mixed together in a prescribed ratio, injected into or poured over a mold and subjected to heat to initiate and complete cross-linking of the monomers present in the pre-polymer fluid. The process of rapidly injecting a pre-polymer fluid into a mold and then cross-linking or curing the part is often referred to as reaction injection molding (RIM). The process of pouring a pre-polymer fluid over a mold and then allowing the part to cross-link or cure is often referred to as casting. Mold inserts for RIM or casting can be fabricated using standard methods of machining, electrical discharge machining, and other means known in the art.

The microfluidics layer of the platform can also be manufactured from a thermoplastic material such as acrylic, polystyrene, polycarbonate, or polyethylene. Because the dimensions of the channels and cuvettes may be much smaller than those found in the reservoir layer, typical fabrication methods with these materials may include not only machining and conventional injection molding but also compression/injection molding, and embossing or coining. For injection molding, the mold inserts that are used to define the features of this layer of the platform can be created using conventional methods such as machining or electrical discharge machining. For mold inserts with features too fine to be created in conventional ways, various microfabrication techniques are used. These include silicon micromachining, in which patterns are created on a silicon wafer substrate through the use of a photoresist and a photomask (Madou, 1997, Fundamentats of Microfabrication, CRC Press: Boca Raton, FL). When the silicon wafer is subjected to an etching agent, the photoresist prevents penetration of the agent into the silicon beneath the photoresist, while allowing etching to occur in the exposed areas of the silicon. In this way patterns are etched into the silicon and can be used to create microfabricated plastic parts directly through embossing. In this process, the etched silicon is brought into contact with a flat thermoplastic sheet under high pressure and at a temperature near the glass transition temperature of the plastic. As a result, the pattern is transferred in negative into the plastic.

Etched silicon may also be used to create a metal mold insert through electroplating using, *for example,* metallic nickel. Silicon etched using any one of a variety of techniques such as anisotropoic or isotropic wet etching or deep reactive ion etching (DRIE) may serve as a basis for a metal mold. A seed layer of nickel is deposited through evaporation on the silicon; once such an electrically-conductie seed layer is formed, conventional electroplating techniques may be used to build a thick nickel layer. Typically, the silicon is then removed (Larsson, 1997, Micro Structure Bull. 1: 3). The insert is then used in conventional injection molding or compression/injection molding.

In addition to silicon micromachining for mold inserts, molds can alternatively be created using photolithography without etching the-silicon. Photoresist patterns are created on silicon or other appropriate substrates. Rather than etching the silicon wafer as in silicon micromachining, the photoresist pattern and silicon are metallized through electroplating, thermal vapor deposition, or other means known in the art. The metal relief pattern then serves as a mold for coining, injection molding, or compression/injection molding as described above.

The microfluidic layer of the platform can also be manufactured using a thermoset material as described above for production of the reservoir layer, wherein the mold pattern for thermosets of the microfluidics layer is prepared as described above. Because reaction-injection molding and casting do not require the high pressures and temperatures of injection molding, a wider variety of mold patterns may be used. In addition to the use of a silicon or metal mold insert, the photoresist pattern as described can also be used as a mold relief itself. While the photoresist would not withstand the high pressures and temperatures of injection molding, the milder conditions of casting or RIM create no significant damage.

The assembly of the platform involves registration and attachment of the microfluidic layer to the reservoir layer. In order for the microfluidics structures on the platform to be useful for performing assays as described herein, certain microfluidics pathways in the reservoir layer must be connected to certain microfluidics pathways in the microfluidics layer. Registration of these microfluidics pathways may be accomplished through optical alignment of fiducial marks on the microfluidic and reservoir layers or through mechanical alignment of holes or depressions on the microfluidic layer with pins or raised features on the reservoir layer. The required registration tolerances may be relaxed by designing the microfluidics pathway in the reservoir layer to be much larger than the microfluidics pathway in the microfluidics layer, or *vice versa*.

Attachment may be accomplished in a number of ways, including conformal sealing, heat sealing or fusion bonding, bonding with a double-sided adhesive tape or heat-sealable film, bonding with a ultraviolet (UV) curable adhesive or a heat-curable glue, chemical bonding or bonding with a solvent.

A requirement for conformal sealing is that one or both of the layers are made of an elastomeric material and that the surfaces to be bonded are free of dust or debris that could limit the physical contact of the two layers. In a preferred assembly approach, an elastomeric microfluidics layer is registered with respect to and then pressed onto a rigid reservoir layer. The elastomeric microfluidics layer may be advantageously made of silicone and the rigid reservoir layer may be advantageously made of acrylic or polycarbonate. Hand pressure allows the layers to adhere through van der Waals forces.

A requirement for heat sealing or fusion bonding is that both the reservoir and microfluidics layers are made of thermoplastic materials and that the sealing occurs at temperatures above the glass transition temperatures, in the case of amorphous polymers, or melting temperatures, in the case of semi-crystalline polymers, of both of the layer materials. In a preferred assembly approach, the microfluidics layer is registered with respect to and pressed onto the reservoir layer, this composite disk is then placed between two flat heated blocks and pressure is applied to the composite through the heated blocks. By adjusting the temperature versus time profile at each of the faces of the composite disk and by adjusting the pressure versus time profile that is applied to the composite system, one can determine the time-temperature-pressure profile that allows for bonding of the two layers yet minimizes variation of the features within each of the layers. For example, heating two acrylic disks from room temperature to a temperature just above the glass transition temperature of acrylic at a constant pressure of 250 psi over one hour is a recipe that allows for minimal variation of 250 $\mu$m wide fluidic channels. In another assembly approach, the bond surfaces of the microfluidics and reservoir layers are separately heated in a non-contact fashion with radiative lamp and when the bond surfaces have reached their glass transition temperatures the microfluidics layer is registered with respect to and pressed onto the reservoir layer.

A double-sided adhesive tape or heat sealable film may be used to bond the microfluidics and reservoir layers. Before bonding, holes are first cut into the tape (or film) to allow for fluid communication between the two layers, the tape (or film) is registered with respect to and applied onto the reservoir layer, and the microfluidics layer is registered with respect to and applied onto the tape(or film)/reservoir layer composite. In order to bond a heat-sealable film to a surface, it is necessary to raise the temperature of the film to above the glass transition temperature, in the case of an amorphous polymer, or the melting temperature, in the case of a semicrystalline polymer, of the film's adherent polymer material. For bonding with an adhesive tape or a heat-sealable film, an adequate bond can typically be achieved with hand pressure.

A photopolymerizable polymer (for example, a UV-curable glue) or a heat-curable polymer may be used to adhere the microfluidics and reservoir layers. In one approach, this glue is applied to one or both of the layers. Application methods include painting, spraying, dip-coating or spin coating. After the application of the glue the layers are assembled and exposed to ultraviolet radiation or heat to allow for the initiation and completion of cross-linking or setting of the glue. In another approach, the microfluidics and reservoir layers are each fabricated with a set of fluid channels that are to be used only for the glue. These channels may, for example, encircle the fluid channels and cuvettes used for the assay. The microfluidics layer is registered with respect to and pressed onto the reservoir layer. The glue is pipetted into the various designated channels and after the glue has filled these channels, the assembled system is exposed to ultraviolet radiation or heat to allow for the cross-linking or setting of the glue.

When polydimethylsiloxane (PDMS) or silicone is first exposed to an oxygen plasma and then pressed onto a similarly treated silicone surface in an ambient environment, the two surfaces adhere. It is thought that the plasma treatment converts the silicone surface to a silanol surface and that the silanol groups are converted to siloxane bonds when the surfaces are brought together (Duffy et al., 1998, Anal. Chem. 70: 4974-4984). This chemical bonding approach is used to adhere the silicone microfluidics and reservoir layer.

A requirement for solvent bonding is that the bond surfaces of both the microfluidics and reservoir layers can be solvated or plasticized with a volatile solvent. For solvent bonding, the bond surfaces are each painted with the appropriate solvating fluid or each exposed to the appropriate solvating vapor and then registered and pressed together. Plasticization allows the polymer molecules to become more mobile and when the surfaces are brought in contact the polymer molecules become entangled; once the solvent has evaporated the polymer molecules are no longer mobile and the molecules remain entangled, thereby allowing for a physical bond between the two surfaces. In another approach, the microfluidics and reservoir layers are each fabricated with a set of fluid channels that are to be used only for the solvent and the layers are bonding much like they are with the UV-curable or heat-curable glue as described above.

Once assembled, the internal surfaces of the microfluidic manifold may be passivated with a parylene coating. Parylene is a vapor-deposited conformal polymer coating that forms a barrier layer on the internal, fluid-contacting surfaces of a microfluidic device following construction. The coating forms an impermeable layer that prevents any exchange of matter between the fluids and materials used to construct the device. The use of a low temperature, vapor deposition method allows the device to be manufactured and then passivated in its final form. This passivation approach can be used to improve the performance of assays. In particular, when an adhesive is used in the disk construction, there is a potential for contamination of the fluids by the adhesive material (or the plastic substrate or cover). Interfering substances leaching from the adhesive, or adsorption and binding of substances by the adhesive, can interfere with chemical or biochemical reactions. This can be more of a problem at elevated temperatures or if solvents, strong acids or bases are required.

**Construction of Electric or Electronic Platen comprising Temperature Control Elements**

The invention provides an electric or electronic platen containing temperature control elements positioned on the platen to correspond to microfluidics structures such as thermal cycling chambers and sacrificial valves. The platen and microfluidics structures are aligned using fiducials or other registers for proper positioning the components on each platform layer with each other.

A micromanipulation apparatus may be used for rotating the platen and microfluidics platform, including most preferably a slip ring feature on a rotational spindle or axis that permits electrical contact to be maintained between the device and the rotating platen. Temperature controlling elements are provided in the device to maintain any particular temperature at a specific position on the disc surface using thermistors and heating elements, including resistive heaters and Peltier elements. The device controls rotation of the microfluidics disc and distributes and receives electrical signals to the platen rotating with the microfluidics disc in real time.

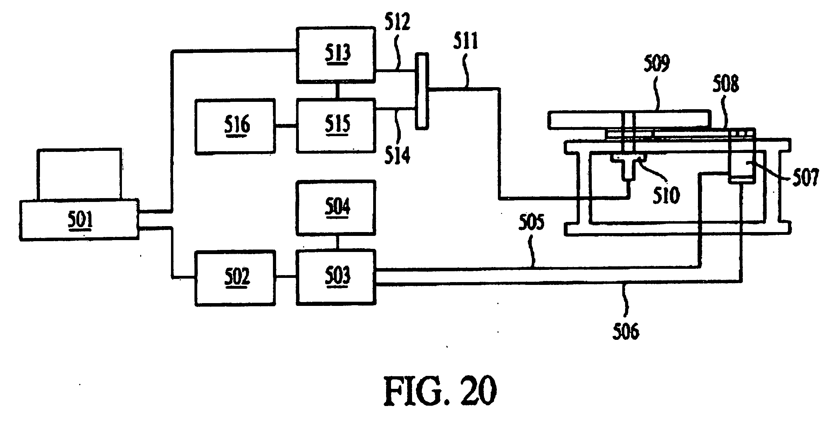

The relationship between the device and platen is illustrated in Figure 20. With regard to the Figure, platen **509** is inserted on a spindle containing 24-channel slip ring **510,** commercially available from Litton, (Part No. AC6023-24). Rotation of the platen about the spindle is controlled by drive motor **507**, preferably also comprising an encoder such as one commercially available from Micromo, (Part No. 3557K012CR), via drive belt **508**. Drive motor **507** is controlled by the device through drive motor power line **505** and where application encoder signal line **506.**

The device is controlled by microprocessor **501,** most preferably comprising a computer such as a PC. Platform rotation is controlled by servomotor controller **503,** for example as commercially available from J.R. Kerr (Part No. PIC-SERVO). Servo motor **503** is equipped with a power supply **504,** commercially available from Skynet Electronic (Part No. ARC-2133). The servo motor is controlled by the PC through an interface, for example, using a serial port converter connected to the COM port of the PC (Part No. Z238-485, J.R. Kerr).

The device is also provided having a control system for controlling electric power to the platen. A multiline cable **511** connects the slip ring to a breakout board **517,** which is connected to a proportional integral derivative (PID) circuit connected to a commercially-available A/D board in the PC (Computer Boards, Part No. CIO-DAS 1600) by temperature sensor line **512.** This circuit receives temperature data from thermistors on the platen surface, disclosed more extensively below, and controls current delivery to temperature control elements by programmable current source 515 and power source **516.**

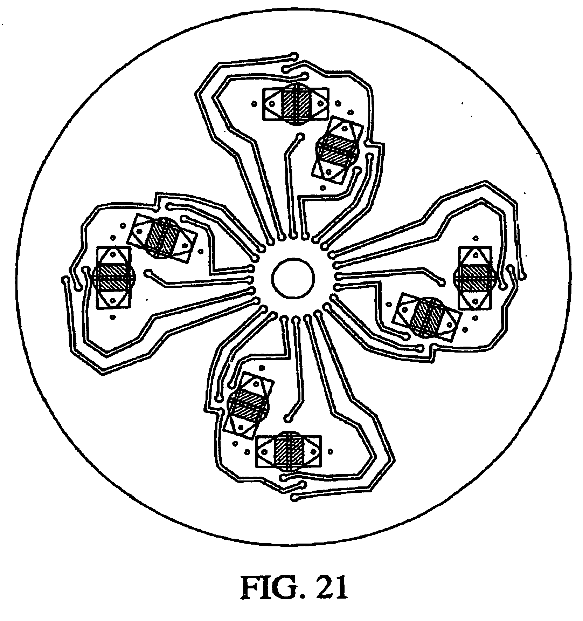

The platen itself is shown in plan view in Figure 21. The platen most preferably is constructed from printed circuit board **551** onto which electronic elements (including electrical leads, thermistors. Peltier elements, brass blocks for providing thermal contact with the microfluidics disc, and radiative fins for heat dissipation have been affixed.

Figure 21 shows the layout of the temperature control elements on the platen, illustrated in the Figure with Peltier elements **554.** The platen has brass thermal contacts **552** and **553** positioned on the platen surface to correspond to microfluidics structure on the microfluidics disc. Brass contact **552** has a groove **555** embedded therein to accommodate a temperature sensing element. Positioned in between the thermal contacts in each combination is Peltier element **554.** Also illustrated in the Figure is a second temperature control element, comprising brass thermal contacts **557** and **558,** groove **559,** and Peltier element **558.** The positioning of these elements permits temperature control and heating of multiple components of a particular microfluidics structure (such as control of thermal cycling chambers and lysis chambers, for example).

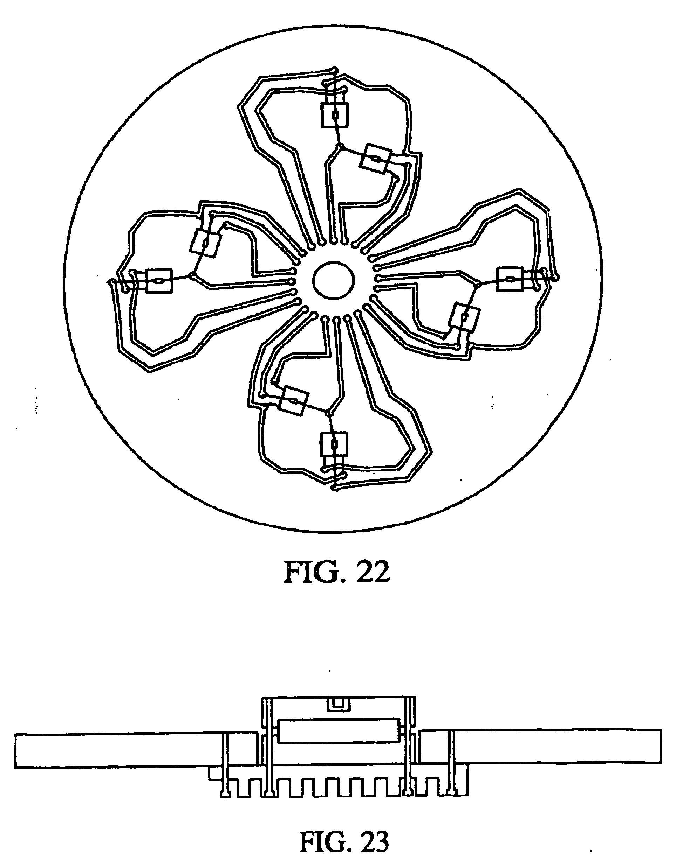

Electric leads controlling the temperature control elements on the platen are more specifically depicted in Figure 22. Peltier element **554** is controlled by leads **601** and **605** connected through **607** and **608.** Thermistor **606** contained in groove **555** is controlled (that is, the temperature information in the form of changes in resistance to current flow in the thermistor upon heating or cooling is transmitted to the temperature control elements in the PC) through leads **600** and **602** connected through **609** and **610.** Similarly, Peltier element **558** is controlled by leads **603** and **605** connected through **612** and **613.** Thermistor **611** contained in groove **559** is controlled (that is, the temperature information in the form of changes in resistance to current flow in the thermistor upon heating or cooling is transmitted to the temperature control elements in the PC) through leads **602** and **604** connected through **614** and **615.** In construction of the electric connections between the elements on the platen and the slip ring, the use of the same lead as a "ground" (*see, for example,* the common connection to lead **602** between thermistor **606** and thermistor **611**) conserves the number of connections used per element and permits control of up to 8 elements per platen.

The structure of the temperature control element is displayed in cross section in Figure 23. Peltier element **554** is positioned on platen surface **551** between brass contacts **552** and **553.** and held together with bolts **653** and **654.** Brass contacts **552** and **553** act as heat sources and sinks to transfer heat to and from the Peltier element **554.** The microfluidic disk sits on brass contact **552.** When heating the disk, the top surface of the Peltier element **554** heats brass contact **552,** and brass contact **553** is cooled. When cooling the disk, the top surface of the Peltier element **554** cools brass contact **554** and heats brass contact **553.** An additional aluminum heat sink **652** is positioned in thermal contact with brass contact **553,** providing additional heat sink capacity, enhancing Peltier element **554** performance. Aluminum heat sink **652** is mounted to the platen **551** using screws **651** and **655.** Brass contact **552** contains thermistor **606** in a cavity containing alumina-filled epoxy **650** that increases the temperature sensitivity of the thermistor. Thermal grease is applied between pieces **552, 554, 553,** and **652** to increase thermal contact between the parts.

In the use of the platen of the invention, the platform of the invention is assembled using thermal grease between the brass contacts and the plastic microfluidics layer. Alternatively, the brass contact is provided as a convex layer that is mechanically clamped to the flexible plastic microfluidics layer.

Alternative embodiments of the platens of the invention include so-called "intelligent" platens comprising one or a multiplicity of microprocessors, thereby permitting a reduced set of connections between the slip ring and the printed circuit board comprising the substrate of the platen. Integrated circuit packages such as a BASIC STAMP II embedded controller can be preprogrammed by the PC to control the distribution of signals through the platen circuitry, thereby requiring only an input power and ground connection between the slip ring and the platen.

**DNA Sample Preparation Platform**

One embodiment of the invention provides a DNA sample application platform for preparing plasmid and genomic DNA from bacteria or eukaryotic, most preferably mammalian cells. This embodiment is described herein for a single microfluidics structure. However, platforms comprising a multiplicity of these microfluidics structures are provided and are encompassed by the invention, wherein a multiplicity of the microfluidics structures described herein are provided on the platform.

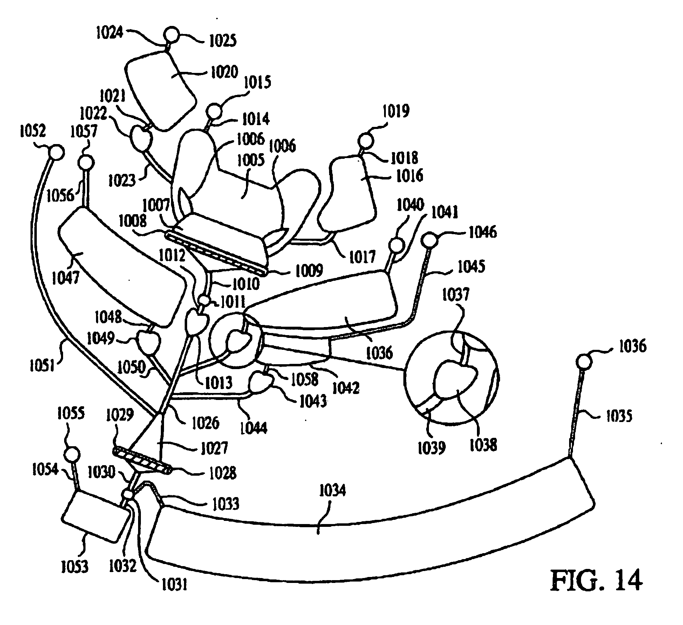

Referring now to the Figures for a more thorough description of the invention, Figure 14 illustrates one embodiment of sample processing structure of the microfluidics disc in close-up. For orientation, the center of the disc is beyond the top of the Figure. Chamber 1005 has a depth in the platform surface of from about 0.1 cm to about 0.25 cm, about 0.7cm to 1.5 cm in width and about 0.4 cm to 0.8 cm in length, and has a volumetric capacity of from about 50μL to about 1.0mL (depth 0.2286 cm, width 1.4315 cm, length 0.7879 cm) is a combination sample input chamber and mixing chamber. Within the chamber are mixing baffles 1006 that are from about 0.05 cm to about 0.1 cm wide and from about 0.2 cm to about 0.4 cm long (width 0.1155 cm, length 0.3720 cm) for producing turbulent fluid motion in the chamber upon disc rotation, particularly disc rotation that changes direction rapidly and/or repeatedly. In a position in chamber 1005 most radially most distal from the center of rotation is slot **1008** having depth in the platform surface of from about 0.1 cm to about 0.25 cm (depth 0.2286 cm, width 1.0537 cm, length 0.0794 cm), which contains frit material in which a filter **1009** is placed. The frit material is manufactured by Porex, X-4588, 70μm pore size, and the filter is a Whatman filter paper #54 which is placed further out radially on the disc from the frit material. The frit material acts in this application as a filter that, as a porous membrane, allows the liquid to flow through but retains the precipitate. The filter paper in this case is used as a final filtration step; the frit has filtered the majority of the precipitate, but the filter paper has a finer pore size that allows little to no precipitate through. Chamber **1005** is also equipped with an inclined portion **1007** where the depth of the platform decreases in a radially-outward direction and rises from the chamber floor to a depth from about 0.1cm to about 0.25cm (depth 0.2286 cm) to form the inner edge of filter slot **1008;** the depth of the inner portion of the slot (depth 0.1524 cm) is intermediate between the floor of the chamber **1005** and the top surface of the disc, and thus forms a gap through which fluids flow upon disc rotation at sufficient speed. Entry port **1015** is fluidly connected to chamber **1005** through microchannel **1014,** having dimensions of from about 0.001 cm to 0.2 cm in depth, about 0.0125cm to about 0.025cm in length and cross-sectional dimension of from about 0.001cm to about 0.2cm (depth 0.0254 cm, width 0.0254 cm, length 0.2118 cm). Entry port **1015** is preferably adapted to fluidics loading devices such as pipettors and automated embodiments thereof.

On the radially-distal side of filter **1009,** the radially-outward exit from chamber **1005** is fluidly-connected to microchannel **1010** having a depth in the platform surface of from about 0.001cm to about 0.2cm, length of from about 0.01cm to about 0.025cm and cross-sectional dimension of from about 0.001cm to about 0.2cm (depth 0.0508 cm, width 0.0508 cm, length, 0.2631 cm). Microchannel **1014** is fluidly connected to pocket **1011** that defines the edge of sacrificial valve **1012.** This pocket **1011** has a depth in the platform surface of from about 0.05cm to about 0.1cm, length of from about 0.04cm to about 0.08cm in length and cross-sectional dimension of from about 0.05cm to about 0.1cm (depth 0.1016 cm, width 0.1060 cm, length 0.0762 cm), on the radially-distal extent of which is sacrificial valve 1012 wherein the sacrificial valve is preferably made using wax or other material as set forth more fully in co-owned U.S. Patent No. 6,063,589, issued May 16, 2000, and recrystallization chamber **1013,** where melted wax resolidifies without blocking the flow path. Sacrificial valve **1012** has a depth in the platform surface of from about 0.001cm to about 0.2cm, length of from about 0.05cm to about 0.1cm in length and cross-sectional dimension of from about 0.001cm to about 0.2cm (depth 0.0254 cm, width 0.0254 cm, length 0.1056 cm), and recrystallization chamber **1013** has dimensions of from about 0.75cm to about 0.15cm deep, from about 0.1cm to about 0.25cm long and from about 0.1cm to about 0.2cm wide (depth 0.1524 cm, width 0.2031 cm, length 0.2351 cm). As is disclosed more fully herein, sacrificial valve **1012** is in thermal contact with a heating element, most preferably a resistive heater or Peltier heater, wherein the wax comprising the valve is melted by operation of the heater. In preferred embodiments, the heater is constructed in a platform layer beneath, most preferably immediately beneath, the valve, or alternatively comprises a separate platen positioned to have the heater be above or below, most preferably immediately above or below, the valve. Microchannel **1011** and recrystallization chamber **1013** serve to define the length of sacrificial valve **1012,** and wax when deposited in the molten state is naturally confined to this short length of channel by the openings of 1011 and 1013.

Lysis solution reservoir 1016 is positioned radially on the disc substantially at the same distance from the axis of rotation as chamber **1005.** Lysis solution reservoir **1016** has a depth in the platform surface of from about 0.1cm to about 0.25cm, about 0.18 cm to 0.36 cm in width and about 0.3 cm to 0.8 cm in length, and has a volumetric capacity of from about 25μL to about 300μL(depth 0.2286 cm, width 0.3579 cm at the top and 0.5536 cm at the bottom, length 0.7292 cm)and is fluidly connected to chamber **1005** through microchannel **1017.** Lysis solution is most preferably applied fresh to the platform before use using entry port **1019** that is fluidly connected to lysis solution reservoir 1016 through microchannel **1017.** In these structures, entry port **1019** is preferably adapted to fluidics loading devices such as pipettors and automated embodiments thereof, and microchannel **1017** has dimensions of from about 0.001cm to about 0.2cm deep, from about 0.25cm to about 0.5cm in length and cross-sectional dimension of from about 0.001cm to about 0.2cm (depth 0.0508 cm, width 0.0508 cm, length 0.4845 cm).

Precipitant buffer reservoir **1020** is also positioned radially on the disc substantially at the same distance from the axis of rotation as chamber **1005.** Precipitant buffer reservoir **1020** has a depth in the platform surface of from about 0.1cm to about 0.25cm, about 0.4 cm to 0.8 cm in width and about 0.25 cm to 0.50 cm in length, and has a volumetric capacity of from about 35μL to about 400μL (depth 0.2286 cm, width 0.7349 cm, length 0.4960 cm) and is fluidly connected to chamber **1005** through microchannel **1023.** Between precipitant buffer reservoir **1020** and microchannel **1023** is sacrificial valve **1021** and recrystallization chamber **1022,** arrayed substantially as described above for sacrificial valve **1012** and recrystallization chamber **1013.** Precipitant buffer solution is most preferably applied fresh to the platform before use using entry port **1025** that is fluidly connected to precipitant buffer reservoir **1020** through microchannel **1024.**

In these structures, entry port **1020** is preferably adapted to fluidics loading devices such as pipettors and automated embodiments thereof, and microchannel **1024** has dimensions of from about 0.001cm to about 0.2cm deep, from about 0.25cm to about 0.5cm in length and cross-sectional dimension of from about 0.001cm to about 0.2cm (depth 0.0508 cm, width 0.0508 cm, length 0.4845 cm).

Radially distal to sacrificial valve **1012** is microchannel **1026,** which is thereby fluidly connected to chamber **1005.** Microchannel **1026** has dimensions of from about 0.001cm to about 0.2cm deep, from about 0.025cm to about 0.05cm in length and cross-sectional dimension of from about 0.001cm to about 0.2cm (depth 0.1524 cm, width 0.0508 cm, length 0.7060 cm). Microchannel **1026** is fluidly connected to binding column **1027,** which further comprises a DNA affinity matrix. Binding column **1027** has dimensions of from about 0.10cm to about 0.2cm deep, from about 0.3cm to about 0.65cm in length and cross-sectional dimension of from about 0.2cm to about 0.4cm, and has a volumetric capacity of from about 5 to about 20μL (depth 0.1875 cm, width 0.3511 cm at the bottom, 0.04 cm at the top, length 0.5727 cm). Binding column **1027** also comprises matrix material slot **1028** having a depth in the platform surface of from about 0.1cm to about 0.25cm and is from about 0.05cm to about 0.1cm in length and cross-sectional dimension of from about 0.25cm to about 0.5cm, and has a volumetric capacity of from about 5μL to about 15μL (depth 0.2383 cm, width 0.5082 cm, length 0.0921 cm), that when assembled contains matrix material **1029,** structurally supported by a frit. The binding material consists of Whatman Glass Fiber filter (GF-F) that is a glass fiber that binds the DNA when the DNA is in a chaotropic salt solution where the hydration shell of the DNA is disrupted. The frit material is a solid porous material (70μm size pores) that is used in this case to provide a solid support backing for the glass fiber that is too flexible to support itself within the structure. Binding column **1027** is also equipped with an air displacement channel **1051,** having a depth in the platform surface of from about 0.001cm to about 0.2cm and is from about 1.75cm to about 3.5cm in length and cross-sectional dimension of from about 0.001cm to about 0.2cm (depth 0.1524 cm, width 0.0508 cm, length 3.1955 cm) and air vent **1052,** which are constructed to permit air to be displaced from the binding column upon fluid flow therethrough without permitting fluid to flow into air displacement channel **1051.**

Microchannel **1030,** having a depth in the platform surface of from about 0.001cm to about 0.2cm, cross-sectional dimension of from about 0.001cm to about 0.2cm, and being from about 0.1cm to about 0.2cm in length(depth 0.0508 cm, width 0.0508 cm, length 0.2041 cm), is fluidly connected to pocket **1031** which defines the edge of sacrificial valve **1032.** This pocket has a depth in the platform surface of from about 0.05cm to about 0.1cm, length of from about 0.04cm to about 0.08cm in length and cross-sectional dimension of from about 0.06cm to about 0.12cm (depth 0.1016 cm, width 0.1121 cm, length 0.0762 cm). Pocket **1031** is separated from sample collection reservoir **1053** by sacrificial-valve channel **1032** having a depth in the platform surface of from about 0.001cm to about 0.2cm, cross-sectional dimension of from about 0.001cm to about 0.2cm, and being from about 0.05cm to about 0.1cm in length (depth 0.0254 cm, width 0.0254 cm, length 0.0876 cm), which is constructed as described above for sacrificial valves **1012** and **1021.** Sample collection reservoir **1053** has dimensions of from about 0.1cm to about 0.25cm deep, from about 0.3cm to about 0.6cm in length and cross-sectional dimension of from about 0.2cm to about 0.4cm, and has a volumetric capacity of from about 20μL to about 250 μL (depth 0.2286 cm, width 0.6132 cm, length 0.3748 cm). Sample collection reservoir is equipped with air displacement channel **1054** and air vent **1055.** Air displacement channel **1054** has a depth in the platform surface of from about 0.001cm to about 0.2cm and is from about 0.2cm to about 0.4cm in length and cross-sectional dimension of from about 0.001cm to about 0.2cm (depth 0.0254 cm, width 0.0254 cm, length 0.3316 cm). These structures are constructed to permit air to be displaced from the binding column upon fluid flow therethrough without permitting fluid to flow into air displacement channel **1054.**

Leading radially inward from pocket **1031** is microchannel **1033** having dimensions of from about 0.001cm to about 0.2cm deep, from about 0.025cm to about 0.50cm in length and cross-sectional dimension of from about 0.001cm to about 0.2cm (depth 0.0254 cm, width 0.0254 cm, length 0.4195 cm). In some embodiments, microchannel **1033** is treated to present a hydrophobic surface resistant to wetting by fluids. Along the extent of this microchannel is a bend that turns the microchannel direction radially outward and leads to waste reservoir **1034.** Waste reservoir **1034** has dimensions of from about 0.15cm to about 0.3cm deep, from about 0.3cm to about 0.6cm in length and cross-sectional dimension of from about 2.5cm to about 5.0cm, and has a volumetric capacity of from about 350μL to about 1.5mL (depth 0.2794 cm, width 4.4783 cm, length 0.5687 cm). The waste reservoir is equipped with air displacement channel **1035** and air vent **1099.** Air displacement channel **1035** has a depth in the platform surface of from about 0.001cm to about 0.2cm and is from about 0.5cm to about 1.0cm in length and cross-sectional dimension of from about 0.001cm to about 0.2cm (depth 0.0254 cm, width 0.0254 cm, length 0.9240 cm). These structures are constructed to permit air to be displaced from the binding column upon fluid flow therethrough without permitting fluid to flow into air displacement channel **1035.**

The sample preparation microstructures of the platform also comprise first and second wash reservoirs **1036** and **1047.** First wash reservoir **1036** has dimensions of from about 0.1cm to about 0.25cm deep, from about 0.23cm to about 0.46cm in length and cross-sectional dimension of from about 0.75cm to about 1.5cm, and has a volumetric capacity of from about 50μL to about 600μL (depth 0.2286 cm, width 1.3357 cm, length 0.4600 cm). This reservoir is fluidly connected to microchannel **1026** by microchannel **1039,** which is interrupted by sacrificial valve **1037** and recrystallization chamber **1038,** arrayed substantially as described above for sacrificial valve **1012** and recrystallization chamber **1013.** Sacrificial valve **1037** has dimensions of from about 0.01cm to about 0.03cm, length of from about 0.08cm to about 0.12cm in length and cross-sectional dimension of from about 0.01cm to about 0.03cm (depth 0.0254 cm, width 0.0254 cm, length 0.1007 cm). Recrystallization chamber **1038** has dimensions of from about 0.1cm to about 0.2cm deep, from about 0.15cm to about 0.3cm in length and cross-sectional dimension of from about 0.15cm to about 0.3cm (depth 0.1524 cm, width 0.2126 cm, length 0.2302 cm) and microchannel **1039** has dimensions of from about 0.01cm to about 0.2cm deep, from about 0.3cm to about 0.6cm in length and cross-sectional dimension of from about 0.001cm to about 0.2cm (depth 0.1524 cm, width 0.0508 cm, length 0.5910 cm. First wash solution is most preferably applied fresh to the platform before use using entry port **1040** that is fluidly connected to precipitant buffer reservoir **1036** through microchannel **1041.** In these structures, entry port **1040** is preferably adapted to fluidics loading devices such as pipettors and automated embodiments thereof, and microchannel **1041** has dimensions of from about 0.001cm to about 0.2cm deep, from about 0.15cm to about 0.3cm in length and cross-sectional dimension of from about 0.001cm to about 0.2cm (depth 0.0254 cm, width 0.0508 cm, length 0.2521 cm).

First wash reservoir **1047** has dimensions of from about 0.1cm to about 0.25cm deep, from about 0.25cm to about 0.5cm in length and cross-sectional dimension of from about 0.75cm to about 1.5cm, and has a volumetric capacity of from about 75μL to about 850μL(depth 0.2388 cm, width 1.4180 cm, length 0.5065 cm). This reservoir is fluidly connected to microchannel **1026** by microchannel **1050,** which is interrupted by sacrificial valve **1048** and recrystallization chamber **1049,** arrayed substantially as described above for sacrificial valve **1012** and recrystallization chamber **1013.** Sacrificial valve **1048** has dimensions of from about 0.001cm to about 0.2cm deep, from about 0.05cm to about 0.1cm in length and cross-sectional dimension of from about 0.001cm to about 0.2cm (depth 0.0254 cm, width 0.0254 cm, length 0.1023 cm). Recrystallization chamber **1049** has dimensions of from about 0.75cm to about 1.5cm deep, from about 0.15cm to about 0.3cm in length and cross-sectional dimension of from about 0.15cm to about 0.3cm (depth 0.1524 cm, width 0.2179 cm, length 0.2435 cm) and microchannel **1050** has dimensions of from about 0.001cm to about 0.2cm deep, from about 0.2cm to about 0.4cm in length and cross-sectional dimension of from about 0.001cm to about 0.2cm (depth 0.1524 cm, width 0.0508 cm, length 0.3724 cm) Second wash solution is most preferably applied fresh to the platform before use using entry port **1057** that is fluidly connected to precipitant buffer reservoir **1047** through microchannel **1056.** In these structures, entry port **1057** is preferably adapted to fluidics loading devices such as pipettors and automated embodiments thereof, and microchannel **1056** has dimensions of from about 0.001cm to about 0.2cm deep, from about 0.25cm to about 0.5cm in length and cross-sectional dimension of from about 0.001cm to about 0.2cm (depth 0.0254 cm, width 0.0508 cm, length 0.4347 cm).

Elution buffer reservoir **1042** is positioned radially more distal from the center of rotation than first or second wash reservoirs **1036** and **1047.** Elution buffer reservoir **1042** has dimensions of from about 0.1cm to about 0.25cm deep, from about 0.15cm to about 0.3cm in length and cross-sectional dimension of from about 0.4cm to about 0.8cm, and has a volumetric capacity of from about 20μL to about 250μL(depth 0.2286 cm, width 0.7308 cm, length 0.2787 cm) and is fluidly connected to microchannel **1026** by microchannel **1044,** which is interrupted by sacrificial valve **1058** and recrystallization chamber **1043,** arrayed substantially as described above for sacrificial valve **1012** and recrystallization chamber **1013.** Sacrificial valve **1058** has dimensions of from about 0.001cm to about 0.2cm deep, from about 0.05cm to about 0.1cm in length and cross-sectional dimension of from about 0.001cm to about 0.2cm (depth 0.0254 cm, width 0.0254 cm, length 0.1012 cm). Recrystallization chamber **1043** has dimensions of from about 0.075cm to about 0.15cm deep, from about 0.15cm to about 0.3cm in length and cross-sectional dimension of from about 0.15cm to about 0.3cm (depth 0.1524 cm, width 0.2126 cm, length 0.2302 cm) and microchannel **1044** has dimensions of from about 0.001cm to about 0.2cm deep, from about 0.025cm to about 0.05cm in length and cross-sectional dimension of from about 0.001cm to about 0.2cm (depth 0.1524 cm, width 0.0508 cm, length 0.8586 cm). Second wash solution is most preferably applied fresh to the platform before use using entry port **1057** that is fluidly connected to precipitant buffer reservoir **1047** through microchannel **1056.** In these structures, entry port **1057** is preferably adapted to fluidics loading devices such as pipettors and automated embodiments thereof, and microchannel **1056** has dimensions of from about 0.001cm to about 0.2cm deep, from about 1.0cm to about 2.0cm in length and cross-sectional dimension of from about 0.001cm to about 0.2cm (depth 0.0254 cm, width 0.0254 cm, length 1.6623 cm).

The microfluidics structure as disclosed herein are preferably operated in thermal contact with a heater layer, which can be another layer of the platform or provided as a separate platen element as disclosed herein.

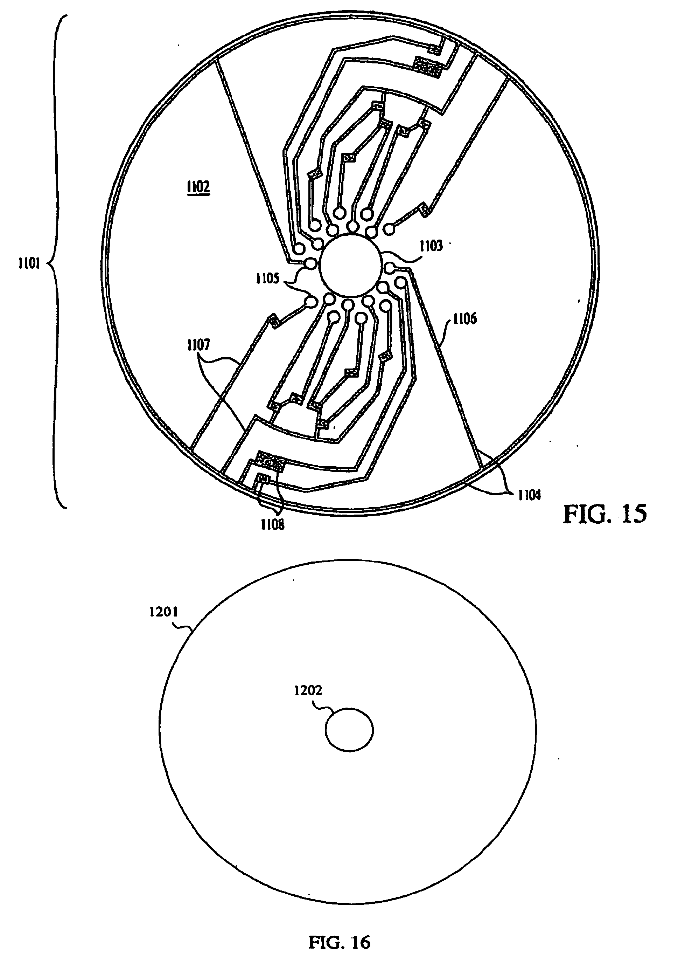

In embodiments of the platform wherein the heater layer comprises a separate layer of the platform itself, the heater layer serves both to seal the reservoir layer, thereby forming enclosed chambers out of the pockets in the surface of that disc, and to provide localized heating through an array of electrical leads and heaters. Heater layer **1101** and component structures thereof is illustrated in Figure 15. Heater layer **1101** consists of a flexible plastic sheet **1102** (most preferably a Mylar sheet, commercially available from ICI, and having a thickness of about 0.00762 cm) onto which are printed or otherwise deposited electrical leads **1104** having a width of from about 0.05cm to about 0.07cm (width 0.0508 cm) and a length that from about 1 to 10cm arrayed on the surface of the heater layer. Heaters **1108** are also printed or otherwise deposited on flexible plastic sheet 1102 and have dimensions of from about 0.1 to about 1cm wide (width 0.6891 cm to 0.2032 cm) and from about 0.1 to about 0.5 cm long (length 0.2032 to 0.2067 cm). Electrical leads **1104** are preferably constructed of a conductive material, such as a silver-based ink, while heaters 1108 are preferably constructed of a resistive material, such as a carbon-based ink (having a thickness of printed material on Mylar sheet of about $10\mu$m). The electrical circuit consists of contact pads **1105** having a radius of about 0.1 to 0.2cm (radius 0.1397 cm) arrayed near the center of the heater layer which may be contacted by a pin assembly on the micromanipulation instrument; when contacting these pins, closed electrical circuits may be formed in which the instrument forms one part and the heater layer the other part. These types of electrical connections between the heater layer and the instrument are more fully disclosed in co-owned U.S. Patent No. 6,063,589, issued May 16, 2000. Lead **1106** forms a common source or sink of current. Leads **1107** branch from this common lead through the heater elements **1108,** and are then connected to the various pads **1105.** When a source of high voltage is applied to pads corresponding to individual heaters and the contact pad associated with **1106** is grounded, electrical current flows through the lead and the resistive element, which dissipates energy and generates heat.

Finally, in some embodiments the platform also comprises a base layer **1201** that serves to insulate the platform for more efficient heating using the heater later. The structure of the base layer **1201** is simply a thermally-insulating material having a center hole **1202** (having a radius of about 1 to 1.5cm; radius 1.4351 cm) for mating with the rotor or spindle of the micromanipulation device of the invention.

In the use of the DNA preparation platforms, cell cultures, particularly bacterial cell cultures, are applied to the platform and plasmid DNA is isolated by cell lysis, separation of plasmid DNA from bacterial cell debris, cell proteins and cell genomic DNA, plasmid DNA capture on an affinity matrix that is washed to effect a buffer change, thereby removing components of the isolation solutions that are incompatible with down-stream uses of the isolated plasmid DNA; and plasmid DNA elution and recovery.

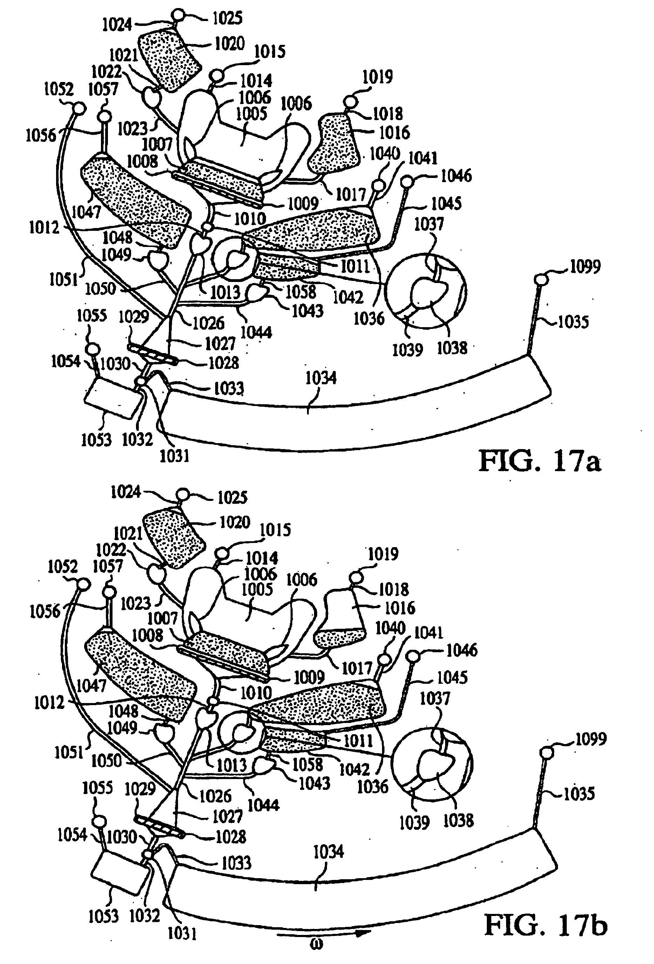

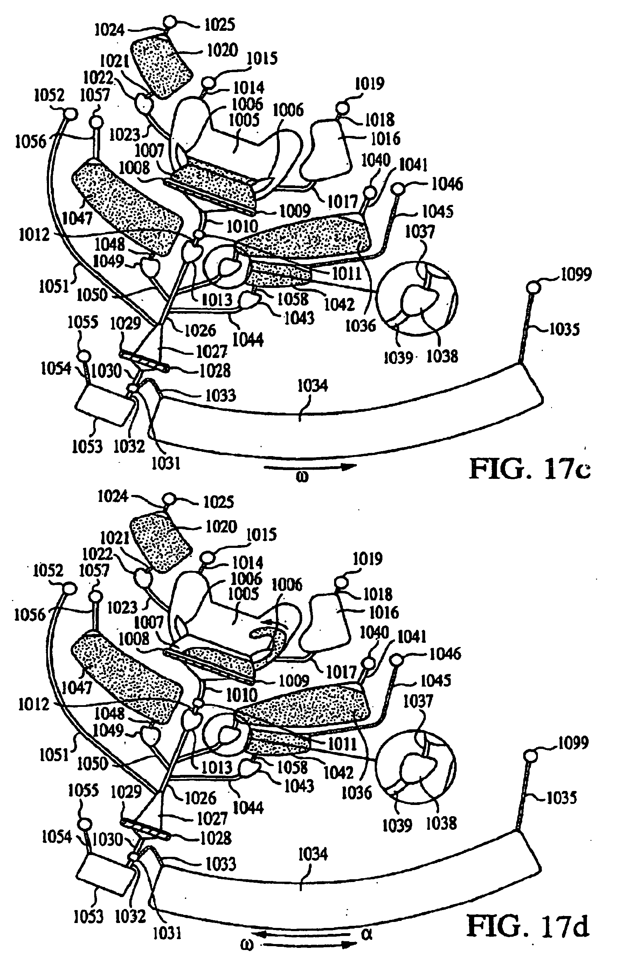

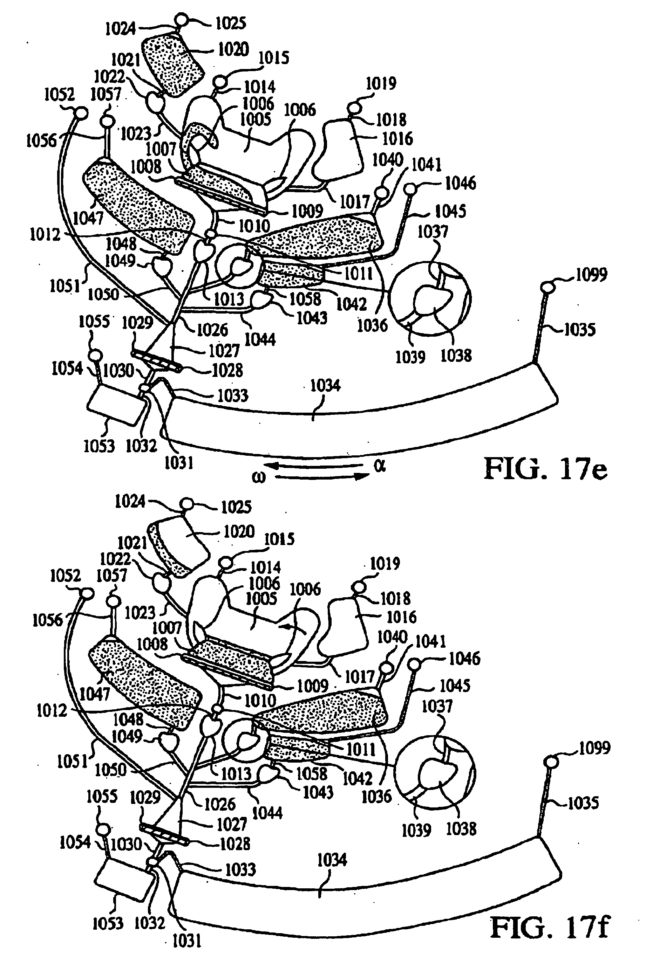

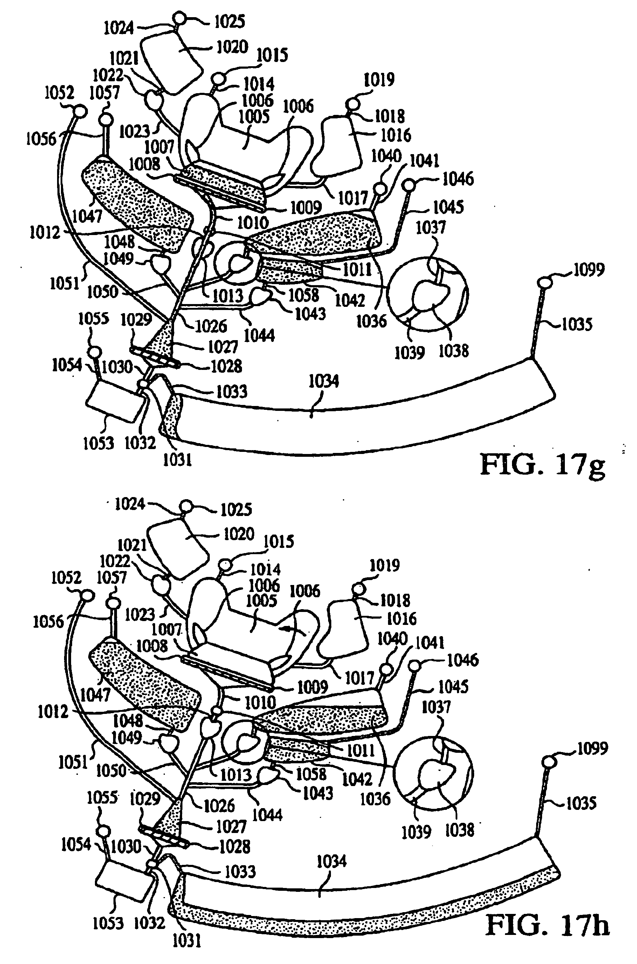

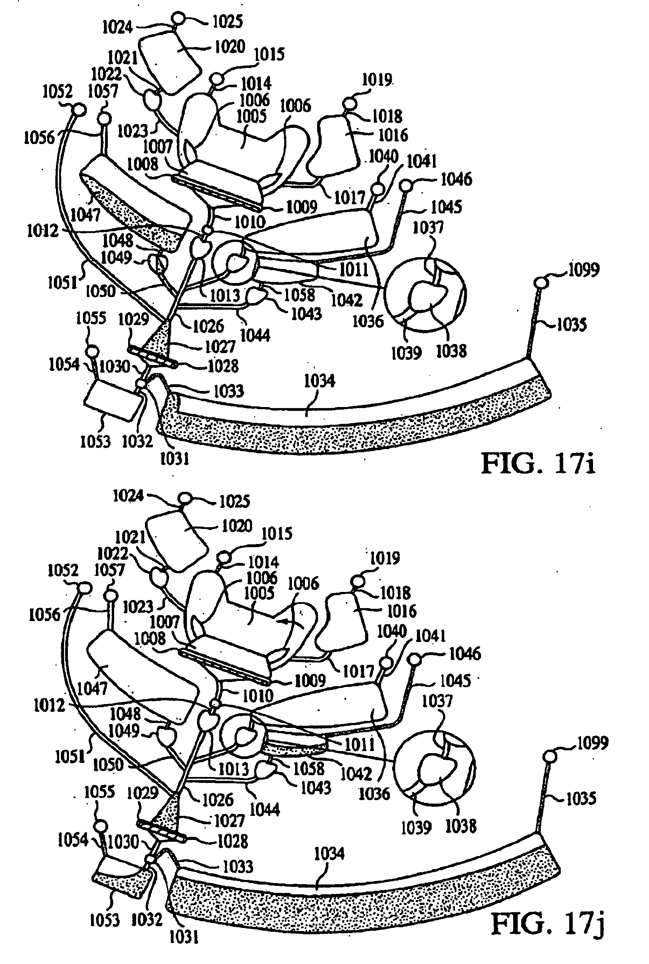

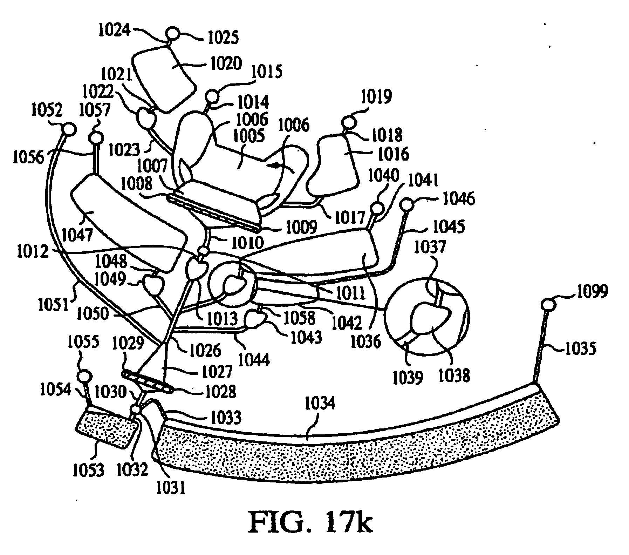

The sequence of fluid movements through the microfluidics structures of the plasmid DNA preparation platforms of the invention is illustrated in Figure 17. In the description of the use of the platform, the sizes and amounts of the microfluidics structures, reagents and samples are provided in exemplary embodiments parenthetically.

To prepare the platform for use, reagent solutions are applied as follows. An amount of the following solutions are added to the platform: alkaline cell lysis solution from about $25\mu$L to about 300 $\mu$L ($50\mu$L) is loaded into reservoir **1016** using entry port **1019** and microchannel **1018;** elution buffer from about $20\mu$L to about 250 $\mu$L ($40\mu$L) is loaded into reservoir **1042** using entry port **1046** and microchannel **1045;** first wash solution from about $50\mu$L to about 600 $\mu$L ($100\mu$L) is loaded into reservoir 1036 using entry port **1040** and microchannel **1041;** second wash solution from about $75\mu$L to about 850 $\mu$L ($150\mu$L) is loaded into reservoir **1047** using entry port **1057** and microchannel **1056;** and precipitating solution from about $35\mu$L to about 400 $\mu$L ($70\mu$L) is loaded into reservoir 1020 using entry port **1025** and microchannel **1024.**

A sample in an amount from about $25\mu$L to about 300 $\mu$L ($50\mu$L) of bacterial culture is then added to chamber **1005** via entry port **1015** and channel **1014.**

The platform is then placed into the micromanipulation device, preferably onto a rotor comprising a slip-ring as described herein and in co-owned U.S. Patent No. 6,063,589, issued May 16, 2000, to enable activation of heaters as described herein. For embodiments with a heater layer, the pins of a slip-ring assembly are brought into contact with the pads **1105** of the heater layer. In these embodiments, alignment groove **1003** serves to set the orientation of the slip-ring assembly relative to the disk, as shown in Figure 15. The heater layer is aligned with the fluidics layer in such a way that the slip ring pin lines up the pin marks on the heater layer.

The disk is then accelerated to the first rotational speed from about 500 to about 1500rpm sufficient to motivate fluid flow of alkaline cell lysis solution from reservoir **1016** through microchannel **1017** into chamber **1005.** The platform is then agitated by being subjected to rapid, positive and negative (*i.e.*, forward and backward) angular accelerations, thereby increasing and decreasing its angular velocity to effect mixing. Mixing baffles **1006** serve to create a circular motion within the fluid, "laminating" the fluid by drawing it into long portions which are folded back onto the main mass of the fluid, as illustrated in the Figure. As the fluid is repeatedly laminated, it is homogenized. For large volumes and systems which are not microfabricated, and with sufficient angular acceleration, the flow within the chamber **1005** is also turbulent, which aids in mixing.

After time sufficient to achieve homogeneous mixing (which will be dependent on the amount of sample and the size of the chamber **1005** and thus empirically determined), bacteria within the sample will have undergone lysis, releasing DNA into the solution. The disk's rotational velocity is then maintained at a second rotational speed from about 500 to about 1500 rpm and the wax valve within capillary **1021** is melted through application of voltage to the corresponding heater pad in thermal contact with the valve. Heat is applied for time sufficient to melt the wax and for the flowing fluid to drive the molten wax out of the capillary and into recrystallization chamber **1022.** The angular velocity is maintained until all of the precipitating solution is driven into the mixing chamber.

The disk is then again agitated as described above to effect mixing. The effect of the precipitating solution is to precipitate genomic DNA, proteins and cellular debris components of the homogenous lysis mixture. This precipitation results in aggregates that can be trapped by filter **1009.** Described above and in assembly portion of the text - comprised of Porex frit material X-4588, 70μm pore size and Whatman Filter paper #54.

After sufficient mixing, the disk's rotational velocity is maintained at a third rotational speed from about 500 to about 1500rpm and the wax valve within capillary **1012** is then melted through application of voltage to the corresponding heater pad in thermal contact with the valve. Heat is applied for time sufficient to melt the wax and for the flowing fluid to drive the molten wax out of the capillary and into recrystallization chamber **1013.** The angular velocity is maintained until all of fluid is driven from the mixing chamber through capillaries **1010, 1012,** and **1026** into binding column **1027.** The cell debris and unwanted precipitates are trapped on the filter **1009.**

The platform is rotated at this angular velocity as the fluid is driven via centripetal acceleration through the binding matrix. Because microcapillary **1032** is blocked by a sacrificial valve, fluid is driven into microchannel **1033,** with the centrifugally-induced pressure overcoming the hydrophobicity of the surface treatment of the channel. The fluid is then delivered to the waste chamber **1034.**

Platform rotation is maintained until all fluid passes through the matrix **1028** in binding chamber **1027,** which is typically a porous material. Because the end of microchannel **1033** that is fluidly connected to waste chamber **1034** is more distant from the platform's axis of rotation than the opposite end of the channel, it is possible to draw all fluid out of binding chamber **1027,** microchannel **1030,** and pocket **1031** by siphoning action. This has the advantage of reducing contamination or backflow between various steps.

Once all of the fluid has been driven through the matrix **1028,** plasmid DNA is bound thereto. Typically, these matrix materials present positive charges that attract the negative charges of the DNA. There are several different types of affinity matrices that have been implemented on the disc that utilize the differences in charge between the DNA and the matrix. Both ion exchange resins as well as silicas and glass fibers including diatomaceous earth, refined silica resins, DEAE as well as glass fiber filters have been used to demonstrate the capabilities on the disc to use charge differences to bind DNA.. The platform is then rotated at a fourth rotational speed from about 500 to about 1500rpm while heat is applied to the wax valve within capillary **1037,** releasing the first wash solution through microchannels **1039** and then **1026,** fluidly connected to binding column **1027.** This fluid is driven through the binding matrix and into the waste chamber as previously described. This wash is intended to remove the components of the lysis and precipitating solutions trapped within the matrix material.

The second wash solution contained within reservoir **1047** is then released through melting of its sacrificial valve **1048** and fluid flow through microchannels **1050** and **1026** and into binding chamber **1027** where it is washed through matrix **1028** and into waste chamber **1034.**

After these treatments, the bound plasmid DNA on the matrix contains only trace amounts of other fluids and materials used in the sample processing steps. The platform is then rotated at fifth rotational speed from about 500 to about 1500rpm and sacrificial valve in capillary **1032** is opened through application of heat, opening the fluid connection between matrix **1028** in binding chamber **1027** with sample collection reservoir **1053.** Heat is also applied to the sacrificial valve within capillary **1058.** Elution buffer is driven through microchannels **1044** and **1026** and binding column **1027** and most particularly through matrix 1028. Because microchannel **1032** is open, fluid preferentially flows into sample collection reservoir **1053.** Under these conditions, the topography of microchannel **1033,** the hydrophobic coating thereof or both advantageously prevents the fluid from flowing into waste reservoir **1034.** The hydrophobic coating also advantageously prevents back-flowing of waste solution into sample collection chamber **1053** through microchannel **1033.**

The platform is then brought to a halt and the fluid sample containing isolated plasmid DNA is recovered through port 1055 and microchannel **1054.**

## Integrated Sample Preparation and *In vitro* Amplification Platform

Embodiments of the invention also provide platforms having microfluidics structures that are able to perform an integrated suite of biochemical reactions that include DNA sample preparation, *in vitro* amplification, and product recovery or analysis. This embodiment is described herein for a single microfluidics structure. However, platforms comprising a multiplicity of these microfluidics structures are provided and are encompassed by the invention, wherein a multiplicity of the microfluidics structures described herein are provided on the platform.

Referring now to the Figures for a more thorough description of the invention, Figure 1 shows an exploded view of an example of a disk for performing a multiplicity of *in vitro* amplification reactions. The illustrated embodiment of this platform is capable of performing six independent sample prep and PCR operations on six individual samples. Alternative embodiments of the invention, extending the capacity of the platform to larger sample numbers, as well as subdivision and/or combination of samples, is straightforward and is discussed below. The disk shown here performs 96 assays of the general form: mix first fluid A with second fluid B,

This disk illustrates that identical assays may be made by repeating microfluidics structures around the disc at a given radius as well as modifying the structures for placement at different radial positions. In this way, it is possible to fully cover the surface of the disc with microfluidics structures for performing assays. The maximum number of assays that may be performed will depend upon the volume of fluid that may be manipulated reproducibly, *i.e.*, the minimum reproducible dimensions with which the disc may be fabricated, and the amount of hydrodynamic pressure required to drive small volumes of fluid through microchannels at convenient rotational rates. Taking these considerations into account, it is estimated that greater than 10,000 assays having volumes of 1.5nL can be created in a circular platform having a 6cm radius.

In Figure 1, the disk **100** comprises at least three components: a microfluidics disk **201,** a sealing layer 301, and one or more thermal sealing layers **401.** In certain embodiments, microfluidics disk **201** is further provided as a combination of at least two component layers, wherein a reservoir layer **501** is bonded to a microfluidics layer **601.** In these embodiments, the bottom face of the reservoir layer, when mated with the microfluidic layer described below, forms a complete network of enclosed channels and reservoirs through which fluids flow under the impetus of centripetal force created by rotation of the platform about a central axis. In all embodiments, fluid flow permits mixing of various component fluids in the assay and movement of the fluids from sample and reagent reservoirs through mixing structures and into assay collection chambers. In addition, fluid flow can be effectuated to include incubation and wash steps, using structures disclosed in co-owned U.S. Patent No. 6,063,589, issued May 16, 2000. Fluid flow rates of from about InL/s to about 1000μL/s are achieved at rotational speeds of from about 4 to about 30,000rpm. "Passive" or capillary valves are preferably used to control fluid flow in the platform as described in co-owned U.S. Patent No. 6,063,589, issued May 16, 2000, and patent applications U.S. Serial Nos. 08/761,063, filed December 5, 1996; 08/768,990, filed December 18, 1996; 08/910,726, filed August 12, 1997; 08/995,056, filed December 19, 1997; 09/315,114, filed May 19, 1999; 09/579,492, filed May 12, 2000 and 09/595,239, filed June 16, 2000 and granted as US 6,582,662 B1.

In the operation of the platforms of the invention, competition between rotationally-induced hydrostatic pressure and the capillary pressure exerted in small channels and orifices are exploited to provide a rotation-depending gating or valving system. After fluids are deposited in detection chambers positioned towards the outer edge of the platform, a signal, most preferably an optical signal, is detected.

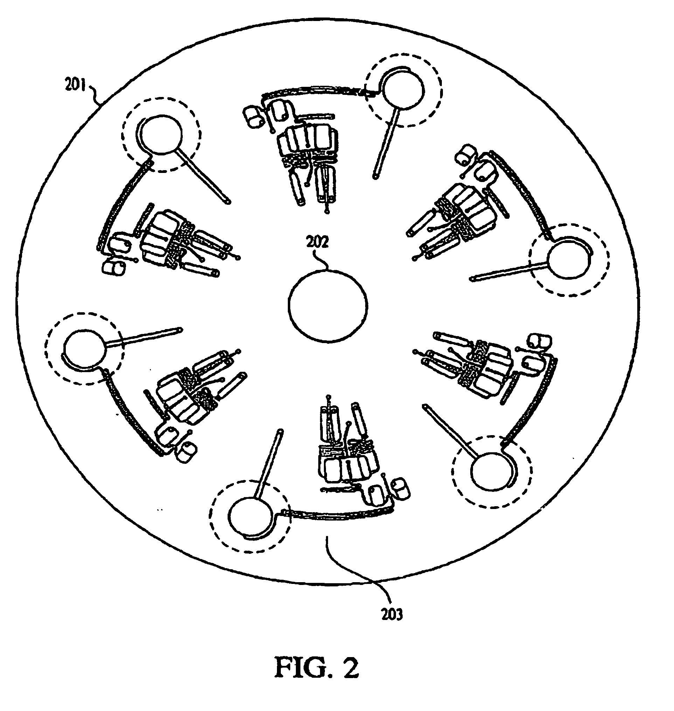

Platform **100** is preferably provided in the shape of a disc 2003 a circular planar platform having a diameter of from about 10mm to about 50mm and a thickness of from about 0.1mm to about 25mm. The structure of microfluidics disk **201** is shown in Figure 2, which depicts the "bottom" face to more clearly illustrate this embodiment of the platforms of the invention.

Microfluidics disk **201** is preferably provided in the shape of a disc, a circular planar platform having a diameter of from about 10mm to about 50mm and a thickness of from about 0.1mm to about 25mm. The disk preferably comprises a center hole **202** for mounting on a spindle, having a diameter of from about 1mm to about 20mm. Center hole **202** can be replaced by an extruded fitting for connection to a spindle, or may be absent entirely, in which case registry and connection to the spindle is accomplished using another portion of the surface of the platform. Microfluidics disk **201** can also include registry features such as the groove **203** that permits a clamping fixture above the platform to be brought in proximity with, but not in contact with, the top surface of the platform when the platform is loaded into the spindle. In embodiments having this feature, a pin on the clamping fixture, preferably spring-loaded, slips into the groove as the disc is spun at low rpm, and captures the clamping fixture, thus determining the platform's orientation with respect thereto. In other embodiments, the platform comprises "home-flag" **204,** that is a reflective or absorbing stripe that can be positioned on the surface of the platform and sensed by an emitter/photodiode pair as the disc is spun, thus permitting the orientation of the disc with respect to the instrument to be determined.

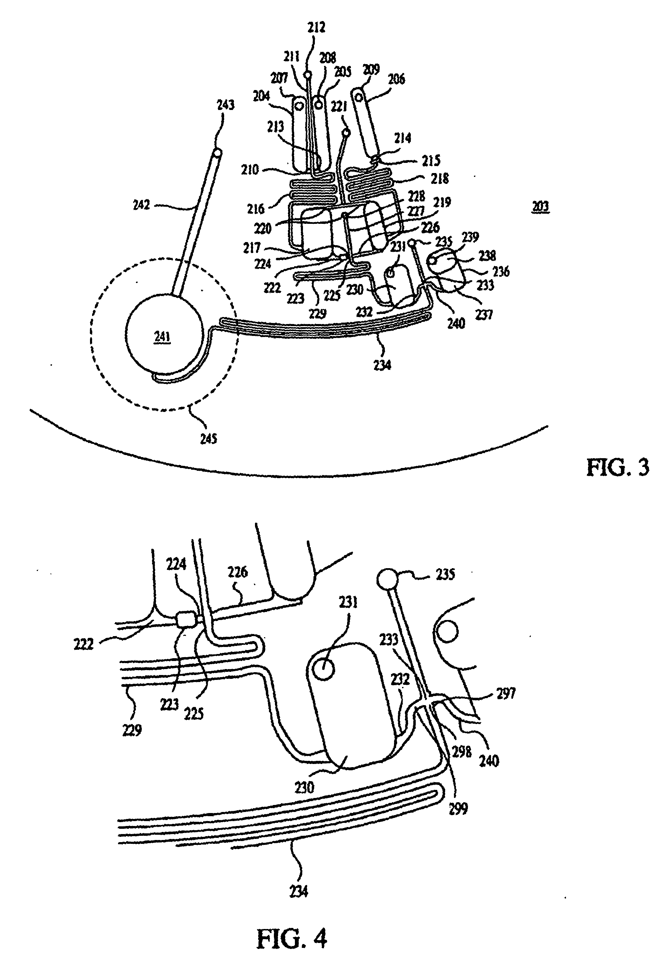

Figure 3 illustrates an expanded view of a section of the microfluidics disk, with the center of the disk being beyond the top of the figure. Reservoirs **204, 205,** and **206** are designed to contain the fluid sample, cell alkaline lysis solution, and neutralizing buffer, respectively. Reservoirs **204** and **205** are designed such their radial position on the disc and extent are identical, and with cross-sectional areas (*i.e.*, depth in the platform x lateral dimension) which form a ratio equal to the desired ratio of fluids to be placed within the reservoirs. Each reservoir has a loading hole (**207, 208** and **209,** respectively) located in the reservoir at a position proximal to the center of the disk. Each reservoir has dimensions of from about 0.05mm to about 5mm wide, from about 0.05mm to about 20mm long, and from about 0.05mm to about 5mm thick, and has a volumetric capacity of from about 0.1nL to about 500μL. Loading holes **207, 208** and **209** preferably have dimensions adapted to automated loading devices such as micropipettors, for example, a standard 200μL plastic pipette tip having a tip diameter of 1.5mm; micropipette tips of diameter 1mm; piezoelectric or ceramic drop delivery systems (such as are sold by the IVEK Corp., Springfield, VT); and inkjet-based fluid delivery systems. For non-contact delivery systems such as piezoelectric or inkjet delivery, the dimensions of the ports must be a few times greater than the size of the droplets, *e.g.*, 0.2mm for a 1nL drop.

The opposite end of reservoir **204** is fluidly connected to microchannel **210** that preferably is constructed at a different depth in the platform surface than the reservoir. This microchannel ends at capillary **211** that preferably is constructed at a different depth in the platform surface than the microchannel **210.** Capillary **211** ends at air-vent **212** located more proximally to the center of the disk than the inner ends of the reservoirs. Reservoir **205** is fluidly connected to microchannel **213** at a position in the reservoir distal to the axis of rotation. Microchannel **213** also ends at capillary **211** as described for microchannel **210.** The construction of the microchannels **210** and **213** and the connection of these microchannels to capillary **211** permits air to be displaced by fluid flow from reservoirs **204** and **205,** but the cross-sectional area of capillary **211** is constructed to be too small to permit liquid fluid flow therethrough. Reservoir 206 is fluidly connected to microchannel **214** that ends at capillary junction **215.**

Microchannels **210** and **213** are fluidly connected to mixing microchannel **216,** and permit mixing of the contents of reservoirs **204** (herein illustrated to contain sample) and **205** (herein illustrated to contain alkaline cell lysis solution). Mixing microchannels are configured to provide mixing of different solutions as the mixture traverses the longitudinal extent of the microchannel. The degree of mixing is dependent on the flow rate of the fluids and the longitudinal extent of the mixing microchannel, which is proportional to the amount of time the two fluids are in contact and are mixed together. The degree of mixing is also dependent on the lateral extent of the mixing microchannel, and is further dependent on the diffusion constants of the fluids to be mixed. In order to accommodate mixing microchannels having sufficient lengths for mixing fluids having a useful range of viscosities, the mixing microchannels are provided as shown. Mixing is promoted by configuring the microchannel to bend several times as it traverses a path on the platform surface that is perpendicular to the direction of rotation, but extends radially on the surface of the platform from a position more proximal to a position more distal to the axis of rotation. Mixing microchannel **216** has a length of from about 1mm to about 100mm, its length in some cases achieved through the use of bends.

Mixing in the device is promoted through diffusion. If two small volumes A and B are added to a single container, diffusion of A into B and/or B into A will effect mixing. The amount of time required for this mixing will depend upon the diffusion constants of the molecules within the solutions whose mixing is desired and the distances over which the molecules must diffuse. For example, 0.5 microliter of solution A comprising a molecule with diffusion constant D is added to a reservoir 1mm on a side. Solution B comprising a molecule whose diffusion constant is also D is added. The solutions will initially occupy the volume with an interface partitioning them. Even if the fluids are highly miscible, the diffusion times to create a completely homogeneous solution will be approximately $t=2x^2/D$. For x=0.05cm (0.5mm) and $D=10^{-5}cm^2/s$, the mixing time is 500 seconds, an unacceptably long time for most reactions. This mixing time may be reduced by mechanical stirring, for example, but stirring is difficult to obtain in fluids confined in small structures because the flow of the fluid is laminar and does not contain turbulent eddies that are known to promote mixing. If, instead of placing fluids A and then B in a 1mm$^3$ container, fluids A and B were placed side-by-side in a long, thin capillary of lateral dimension d, the relevant time for mixing is much shorter. If, for example, $d$ is 100 microns, mixing time $t$ is 20 seconds. The mixing channels of the device simulate the placement of fluid in a long capillary by co-injecting fluid streams A and B into a capillary microchannel. These fluids flow side-by-side down the channel initially. As the fluid is pushed through the microchannel due to centrifugal force produced by rotation of the platform, diffusion occurs between the fluids. By choosing a capillary of sufficiently narrow diameter, sufficient length, and a pumping rate that is sufficiently low, the portion of A and B of the total volumes of A and B present in the channel during pumping can be caused to mix.

These choices may be determined by setting the required time for mixing equal to the amount of time necessary for the fluid to traverse the channel. The required time for diffusion is

$$t_m \approx \frac{2w^2}{D}$$

where w is the lateral size of the channel. The amount of time necessary to traverse the channel is simply the length of the channel divided by the fluid velocity, the velocity being calculated as described in co-owned and co-pending U.S. Serial No. 08/910,726, filed August 12, 1997, and Duffy et al. (1999, Anal. Chem. 71: 4669-4678):

$$t_t = \frac{l}{U} = \frac{l}{\left(\dfrac{\rho\omega^2 \Delta R \langle R \rangle \left(d^H\right)^2}{32\eta l}\right)} = \frac{32\eta l^2}{\rho\omega^2 \Delta R \langle R \rangle \left(d^H\right)^2}$$

where the fluid properties are the density $\rho$ and viscosity $\eta$, $\Delta R$ and <R> are the extent along the radius and average radial position of the fluid subject to centripetal acceleration, and $l$ and $d^H$ are the length and hydraulic diameter of the channel. By choosing variables such that t, is at least equal to or greater than $t_m$, mixing in the microchannels is assured.

Mixing microchannel is fluidly connected at its end distal to the axis of rotation to reservoir **217.** Reservoir **217** has dimensions of from about 0.05mm to about 5mm wide, from about 0.05mm to about 20mm long, and from about 0.05mm to about 5mm thick, and has a volumetric capacity of from about 0.1nL to about 500μL, and is equipped at the end of the reservoir proximal to the axis of rotation with air displacement capillary **220** and air vent **221.** This permits air to be displaced from the reservoir upon fluid flow through mixing microchannel **216** and delivery to reservoir **217.**

Mixing microchannel is fluidly connected at its end distal to the axis of rotation to reservoir **217.** Reservoir **217** has dimensions of from about 0.05mm to about 5mm wide, from about 0.05mm to about 20mm long, and from about 0.05mm to about 5mm thick, and has a volumetric capacity of from about 0.1nL to about 500μL, and is equipped at the end of the reservoir proximal to the axis of rotation with air displacement capillary **220** and air vent **221.** This permits air to be displaced from the reservoir upon fluid flow through mixing microchannel **216** and delivery to reservoir **217.**

Capillary junction **215** is fluidly connected to microchannel **218.** As illustrated in Figure 3, this microchannel is preferably configured to have the same length and diameter as mixing microchannel **216** in order to most easily permit delivery of fluid from reservoirs **204** and **205** into reservoir **217,** and from reservoir **207** to reservoir **219,** to be accomplished simultaneously and coordinately. In alternate embodiments, microchannel **218** is provided having a different length than mixing microchannel 216, since no mixing occurs in microchannel **218.** In other alternative embodiments, fluid is loaded directed into reservoir **219.** Reservoir **219** has dimensions of from about 0.05mm to about 5mm wide, from about 0.05mm to about 20mm long, and from about 0.05mm to about 5mm thick, and has a volumetric capacity of from about 0.1nL to about 500μL, and is equipped at the end of the reservoir proximal to the axis of rotation with air displacement capillary **220** and air vent **221.** This permits air to be displaced from the reservoir upon fluid flow through mixing microchannel **218** and delivery to reservoir **219.** Reservoirs **217** and **219** are designed such their radial position on the disk are identical, and with cross-sectional areas (depth in the platform x lateral dimension) that form a ratio equal to the desired ratio of fluids to be placed within the reservoirs.

Reservoir **217** is fluidly connected to microchannel **222** having a length of from about 0.15cm to about 0.30cm (length 0.2552 cm) and terminates at capillary junction **223.** On the other side of the capillary junction is microchannel **224** having a length of from about 0.015cm to about 0.030cm (length 0.0218 cm) that terminates at air displacement capillary **225.** Air displacement capillary **225** is connected by capillary **227** to expansion volume **228;** alternatively in some embodiments expansion volume **228** is replaced by air vent **228.** The construction of microchannels **222** and **224** and the connection of these microchannels to capillary **227** permits air to be displaced by fluid flow from reservoirs **217** and **219,** but the cross-sectional area of capillary **227** is constructed to be too small to permit liquid fluid flow therethrough. These structures are more fully illustrated in Figure 4.

Reservoir **219** is fluidly connected to microchannel **226** having a length of from about 0.20cm to about 0.40cm (length 0.3205 cm) and terminates at air displacement capillary **225,** forming a capillary junction therewith. The depth and width of microchannel **226** where it joints capillary **225** is preferably different than the depth and width of microchannels **222** and **224.**

Microchannels **224** and **226** are fluidly connected to mixing microchannel **229,** designed similarly to mixing microchannel **216** to insure mixing of fluids from reservoirs **217** and **219.** Mixing microchannel **229** has a length of from about 1mm to about 100mm, its length in some cases achieved through the use of bends, and terminates at reservoir **230,** which also contains air-vent **231.** Reservoir **230** has dimensions of from about 0.05mm to about 5mm wide, from about 0.05mm to about 20mm long, and from about 0.05mm to about 5mm thick, and has a volumetric capacity of from about 0.1nL to about 500μL. Reservoir **230** is fluidly connected to microchannel **232,** which is arrayed on the surface of the platform in a direction radially-inward and terminating at air displacement capillary **233.** The junction **299** between microchannel **232** and capillary **233** is designed with a smoothly-widening enlargement to substantially inhibit capillary-pinning (valving) action, as described more fully below. This junction **299** is fluidly connected to mixing microchannel **234,** the radially-inward end of which is terminated in an expansion volume **235.** Reservoir **236** is positioned at the same radial distance from the axis of rotation as reservoir **230.** Reservoir **236** has dimensions of from about 0.05mm to about 5mm wide, from about 0.05mm to about 20mm long, and from about 0.05mm to about 5mm thick, and has a volumetric capacity of from about 0.1nL to about 500μL. In preferred embodiments, a portion **237** of reservoir **236** radially more distal from the axis of rotation has a depth in the surface of the platform that is more shallow than the depth in the surface of the platform of the portion **238** radially more proximal to the axis of rotation. Reservoir **236** also comprises air vent **239,** which also serves as a loading port.

Microchannel **240** having dimensions of from about 0.15cm to 0.3cm long(length 0.25 cm) and a cross sectional area of from about 0.001cm to about 0.2cm fluidly connects reservoir **236** with air displacement capillary **233** at capillary junction **298.** In contrast to capillary junction **299,** the joint of the microchannel, is designed to provide a "pinning" action, that is, the junction prevents fluid flow. Microchannel **240** is designed to contain a restriction **297** followed by a flared opening in the retrograde direction (*i.e.,* back towards the axis of rotation), connected to capillary **233.** Alternative embodiments of capillary junctions, as disclosed more fully in co-owned U.S. Patent 6,063,589 issued May 16, 2000 and in co-owned and co-pending patent applications U.S. Serial No. 08/910,726, filed August 12, 1997.

Mixing microchannel **234** having a length of from about 1mm to about 100mm, most preferably wherein its length in some cases achieved through the use of bends, terminates at thermal cycling chamber **241.** The depth in the platform surface of thermal cycling chamber **241** is determined by the thermal requirements of cycling, as disclosed more fully below. As shown in Figure 3, the portion of thermal cycling chamber **241** more proximal to the axis of rotation is connected to air channel **242** that terminates in an air-vent **243.** The chamber also comprises an insulating air pocket **245** that is a depression having a diameter greater than the diameter of thermal cycling chamber **241** in the other face of the disc **201.**

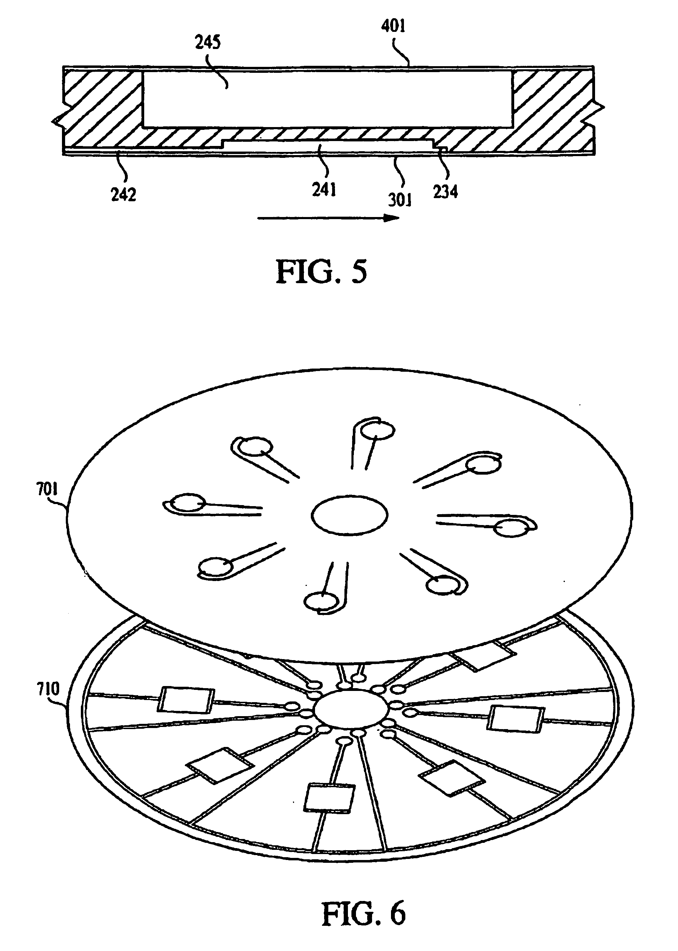

Figure 5 illustrates the assembled disk in the region of the thermal cycling chamber in cross-section. The outward radial direction is indicated by the arrow. The thermal cycling chamber **241** is a depression in the face of the disc **201,** with channel **234** entering at a position radially distal from the axis of rotation, as shown. Sealing layer 301 is provided as described below to cover thermal cycling chamber **241.** Insulating air pocket **245** is shown in he surface of platform **201,** covered by sealing layer **401.**

The microsystems platforms of the invention may be provided to perform *in vitro* amplification reactions, most preferably in an integrated suite of biochemical reactions including DNA isolation, amplification most preferably using the polymerase chain reaction (PCR) and isolation of the amplified fragment, for detection on-disk or off disk (for example, using conventional gel electrophoresis).

This use of the platforms of the invention is shown in Figures 1 through 5; although this use will be understood by those with skill in the art from the disclosure and examples, the functioning of the platform is explicitly described as follows.

The platforms of the invention most preferably accept raw, or at most prediluted, biological fluids containing bacteria or eukaryotic cells, or sample of bacterial or eukaryotic, most preferably mammalian cell culture, or biological fluids such as blood comprising mammalian cells, and to process these fluids through the steps of DNA release from the cells and amplification, most preferably via PCR.

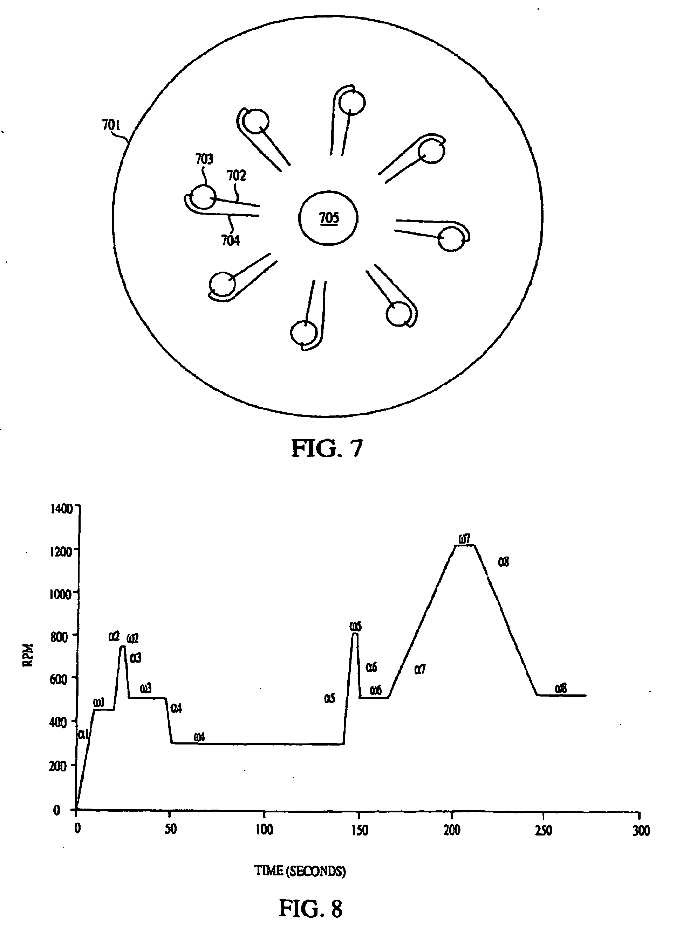

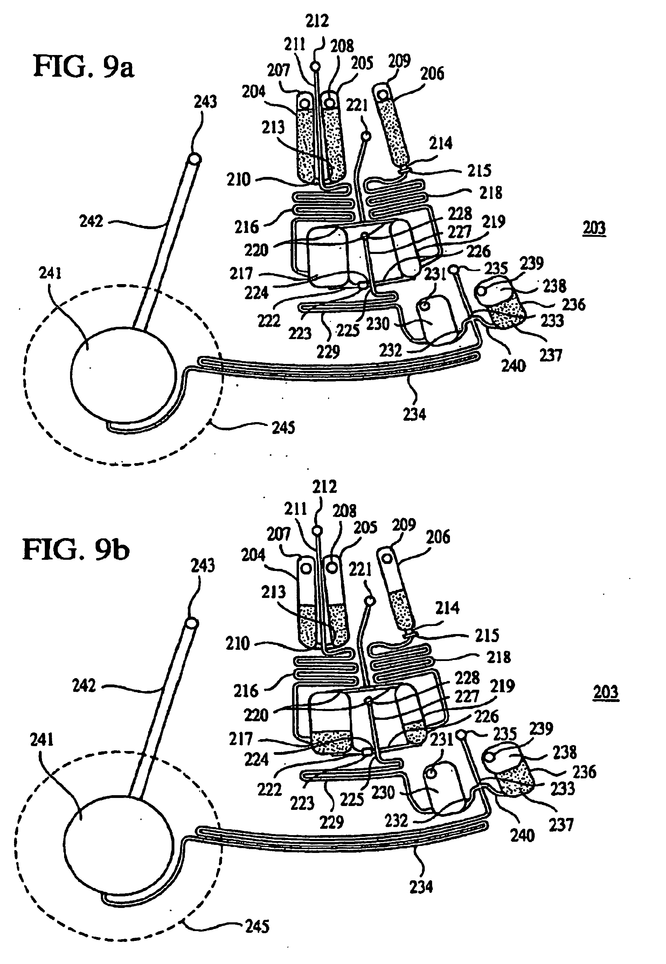

The fluid sample is added to reservoir 204 through entry port 207, an alkaline cell lysis solution, in one instance, NaOH, is added to reservoir 205 through entry port 208, and a conditioning or neutralization buffer solution, in one example, Tris HCl, is added to reservoir 206 through entry port 209. An amplification solution comprising a balanced mixture of deoxyribonucleotide triphosphates (dNTPs) at a concentration of about $200\mu$M, 1-10 Units of a polymerase, most preferably a thermostable polymerase such as *Taq* polymerase from *Thermus aquaticus*, and buffers and salts, particularly $MgCl_2$, appropriate for the amount of target DNA in the sample and the enzyme (the amount of magnesium chloride is typically determined empirically due to the sensitivity of amplification reactions to the concentration of this salt) is added through entry port 239 into reservoir 237. This is shown in Figure 9a. The platform is then placed on a micromanipulation device described herein and more fully in co-owned U.S. Patent No. 6,063,589, and co-owned and co-pending U.S. Serial Nos. 08/761,063, filed December 5, 1996; 08/768,990, filed December 18, 1996; and 08/910,726, filed August 12, 1997. The platform is rotated to motivate fluid flow on the disk in a manner determined by the placement and dimensions of the microfluidics structures on the disc. An exemplary rotational profile is shown in Figure 8. As shown, the platform is first accelerated gently at angular acceleration $\alpha_1$ to an initial rotational rate $\omega_1$ (slightly higher than 400 rpm in Figure 8). Rotation is maintained for a time (about 10 seconds in Figure 8) sufficient to allow the sample and alkaline cell lysis solutions to enter microchannels 210 and 213, flowing until they are stopped ("pinned," as used herein) at the capillary junction with microchannel 211. Similarly, fluid in reservoir 206 flows into microchannel 214 until it is pinned at capillary junction 215. The disk is then accelerated rapidly at angular acceleration $\alpha_2$ to speed $\omega2$ (about 1800 rpm in Figure 8), which may be maintained for a period (as shown in Figure 8). The pressure induced by rotation at this speed forces one or both fluids pinned at microchannel 211 to cross the narrow gap of the microchannel and to come in contact with or "wet" the other fluid; this permits the fluids, now in contact, to drain into mixing microchannel 216 under the impetus of rotational speed $\omega_3$ (about 500 rpm in Figure 8).

As shown in Figure 3, microchannel 210 has a larger cross-sectional area than microchannel 213, and as a result supports a lower capillary pressure than this microchannel. Consequently, the sample fluid bridges the gap across microchannel 211 first.

Concurrently, the velocity increase that motivates fluid from reservoirs 204 and 205 into mixing microchannel 216 also overcomes capillary junction 215, thereby motivating fluid flow from reservoir 206 into mixing microchannel 218.

Once the capillary junctions impeding fluid flow out of the reservoirs 204, 205 and 206 have been overcome, the rotational rate is reduced at acceleration $\alpha_3$ to velocity $\omega_3$ (about 500 rpm in Figure 3); in preferred embodiments, acceleration rate $\alpha_3$ is substantially equivalent to (but has the opposite sign, since this is deceleration) acceleration rate $\alpha_2$ ; this is shown in the Figure. At this lower speed, the overall pressure driving flow into mixing microchannel 216 is reduced. Because mixing microchannel 216 is narrow and long, it presents considerable hydraulic resistance to flow. At this low speed, pressure differences between the fluids in reservoirs 204 and 205 (as may be occasioned, for example, by these reservoirs having different volumes, for example) are "evened out" as fluids flow into mixing microchannel 216. For example, if the fluid from reservoir 204 initially flows more rapidly than the fluid from reservoir 205 flows, the extent of fluid in the radial direction in reservoir 204 will be smaller than that in reservoir **205** at a larger time; hence the pressure exerted at microchannel 211 will be lower than that exerted by the fluid in reservoir 205, resulting in an increase in flow rate of the fluid in reservoir 205 relative to that in reservoir 204, resulting in an "evening out" of the fluid extents or heads in the radial direction. As a result, the fluids enter in strict ratios equal to the ratios of the cross-sectional areas of the reservoirs. Air displaced by the fluids is vented through channels 220 to air-vent 221. Figure 9b illustrates the situation at some time at rotational speed $\omega_3$.

The concurrent fluid flow from reservoir 206 through mixing microchannel **219** is accomplished at rotational speed $\omega_3$. Since no actual mixing usually occurs, the shape of microchannel **218** is unimportant as long as the fluid pumped through it does not fill chamber **219** at too high a rotational rate (*i.e.*, before the velocity drops to $\omega_3$).

Rotation at speed rotational speed $\omega_3$ motivates fluid flow from reservoirs **204, 205** and **206** and into reservoirs **217** and **219.** In addition to preventing changes in the mixing ratio of fluids from reservoirs **204** and **205,** the lower velocity means that the pressure exerted at the outer ends of reservoirs **217** and **219** is low enough not to force the fluids past the capillary junctions designed to retain them.

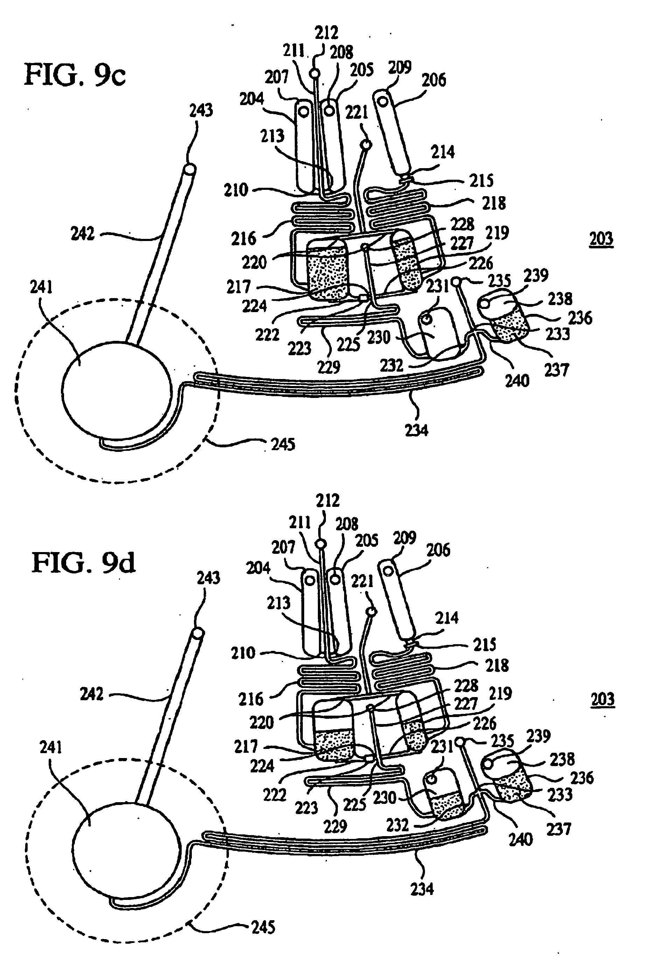

When sufficient time has passed to pump the fluids from reservoirs **204, 205** and **206** and into reservoirs **217** and **219,** the rotational rate is decreased further at acceleration $\alpha_4$ to $\omega_4$;, which is shown to be slightly less than 400 rpm, in Figure 8. This disposition of the fluids on the disk is shown in Figure 9c. Heat is then applied to reservoir **217,** containing the mixture of sample and alkaline cell lysis buffer This heating step, performed at between 85°C and 95°C is applied for between 60 and 120s, and is sufficient to disrupt the bacterial cell walls or mammalian cell plasma membranes, thereby releasing DNA into the solution. The alkaline cell lysis solution also has the effect of denaturing proteins, such as hemoglobin found in blood samples that can interfere with the activity of the polymerase enzyme.

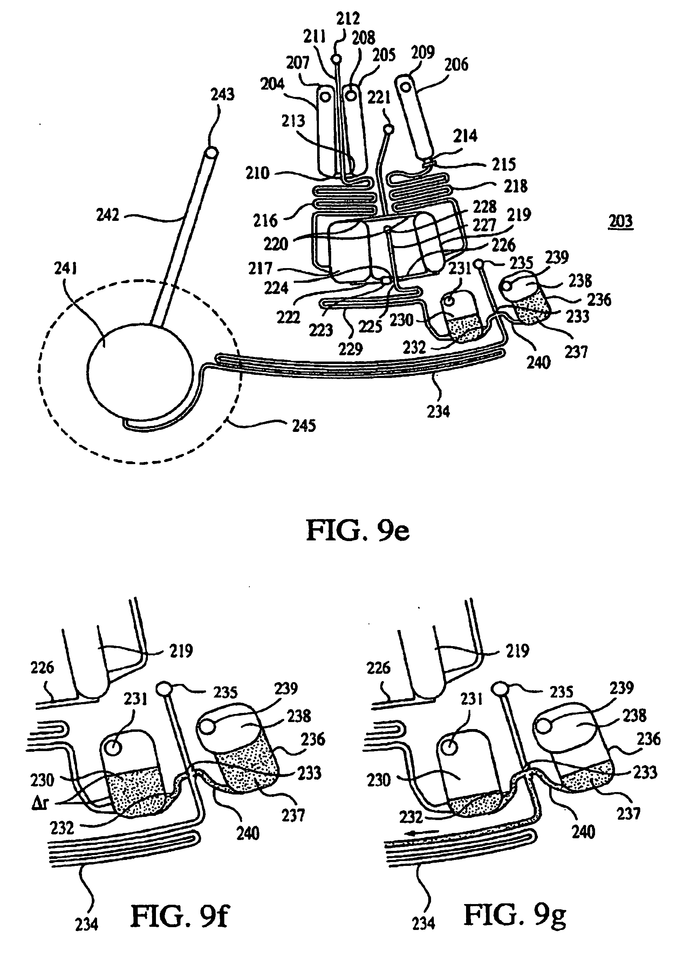

The velocity is then increased at $\alpha_5$ to $\omega_5$ (about 800 rpm) rapidly, as shown in Figure 8, causing the fluids retained at capillary junctions **223** and **226** to come into contact as capillary pressure is overcome. The microfluidics structures are provided wherein the cross-sectional area of **223** is larger than that of **226,** insuring that the lysate is the first to flow. The fluids, once in contact, flow into mixing microchannel **229** and mix, as described above; the velocity is reduced to $\omega_0$ (about 500 rpm in Figure 8) at acceleration $\alpha_6$ for controlled mixing of the lysate and neutralization fluids. Figure 9d illustrates the movement of the fluid mixture into reservoir **230;** Figure 9e illustrates the disposition of fluids after they have been pumped.

When the mixture of the cell lysate and neutralizing buffer have been transferred into reservoir **230,** platform velocity is increased at $\alpha_7$ to velocity $\omega_7$ (about 1200 rpm in Figure 8). This acceleration is typically gentle compared with other accelerations (as depicted by the more lower slope of the acceleration profile shown in Figure 8); this is because the design of chambers **230** and **237** and capillary junctions **233** and **240** present a very small "pressure head" as shown in Figure 9f. The pressure at the capillary junction due to centrifugation is given by

$$ P = \rho\omega^2 < R > \Delta R $$

where $\rho$ is the fluid density, $\omega$ is the angular velocity $= 2\pi \times$ speed in rpm x 60, <R> is the average position relative to the center of rotation of the fluid, and $\Delta R$ is the extent of the fluid in the radial direction inward of the radial position of the capillary junction. Because the geometry is designed to make $\Delta R$ small relative to a channel emptying radially-outward from the bottom of the reservoir, for example, the pressure at a given rotational rate can be made quite low. This has the advantage of making the rotational rate required to drive the PCR reaction mixture in reservoir **236** beyond the capillary junction with microchannel **233** very high and allows the fluid to be retained even during the rapid accelerations sand decelerations of earlier steps in the velocity profile. In contrast, the exit of microchannel **232** into microchannel **233** flares open and presents at least one smooth edge, to prevent pinning of the advancing meniscus. As a result, fluid is not retained, but moves into microchannel **233** and wets the retained PCR reaction mixture. As the rotational velocity is gradually increased, fluids are pumped into mixing microchannel **234.** As shown in Figure 9g, the configuration of the junction of microchannel **233** and microchannel **240** relative to the fluid position in reservoirs **230** and **236** results in the fluids being drawn into mixing microchannel **234** by, in part, a siphoning action. The neutralized cell lysate and PCR reaction mixture are in contact for sufficient time in the mixing microchannel **234** to effect mixing by diffusion; as shown in Figure 8, this mixing is performed at relatively high speed (about 1200 rpm).

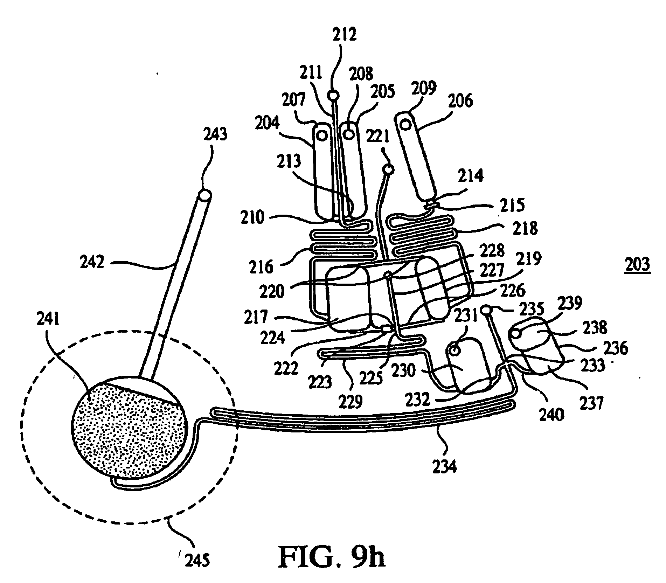

Figure 9h illustrates the final microfluidics state of the disk with all fluid having been delivered to thermal cycling chamber **241.** The platform speed is reduced to rotational speed $\omega_8$ (about 500 rpm in Figure 8), in a slow deceleration profile $\alpha_8$ that is similar to the gradual acceleration Thermal cycling is effected in thermal cycling chamber 241 using a variety of thermal cycling protocols and temperature profiles. Examples of such temperature profiles include:

1. Hold the reaction mixture at high temperature (*e.g.*, 95°C) to denature doublestranded DNA
2. Perform a cycle of step, wherein for n cycles, the following steps are repeated identically n- I times:

   a) drop the temperature to an annealing temperature (*e.g.,* 45°C - 75°C), either transiently or for an annealing period to allow annealing of primers to single-stranded DNA;
   b) raise the temperature an extension temperature (*e.g.,* 60°C - 70°C), either transiently or more preferably with a primer extension period that allows extension of the amplification primers; and
   c) raise the temperature to the denature temperature of the amplified fragment.

Optionally, the final reaction step comprises dropping the mixture to the annealing temperature and then raising the temperature of the thermal cycling chamber to the extension temperature for a time sufficient to substantially complete the extension reactions on all extended products.

The temperature of the sample is then usually reduced to room temperature or below to stop the reaction.

The following Examples are intended to further illustrate certain preferred embodiments of the invention and are not limiting in nature.

## EXAMPLE 1

A microfluidics platform as depicted in Figures 6, 7, 24, 25 and 26 was used to amplify a DNA target from samples of *E. coli*.

Figure 6 gives an exploded view of the two main components of the microfluidics platform. A machined fluidics disk **701** is bonded to a screen printed electrical circuit disk **710.**

Figure 7 shows an array of eight cycling chambers **703** within the fluidics disk. The thermal cycling chambers are circular with a diameter of 7mm and depth of 0.5mm. Each chamber has a reaction mixture loading channel **704** and an air channel **702**. Both channels are 0.5mm wide by 0.5mm deep. The air channel helps to prevent liquid loss upon heating, as vapors cool and condense along its walls before spinning back down to the reaction chamber.

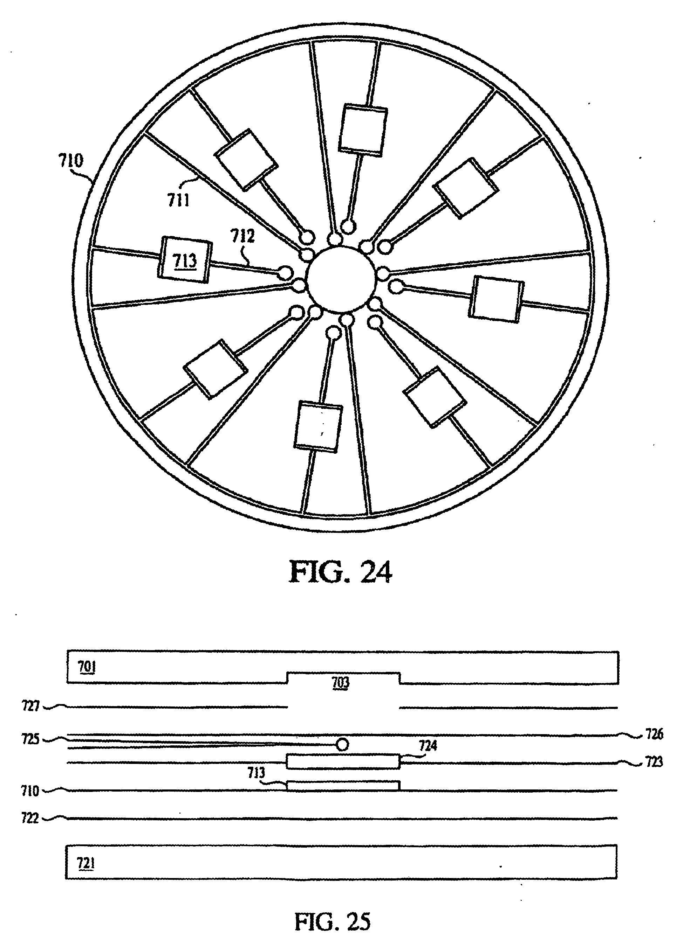

Figure 24 shows how resistive heaters are arrayed on the electrical circuit disk. The resistive heater patches **713** are squares, 10mm on a side. The heater dimensions were chosen to be larger than the cycling chamber dimension to minimize thermal gradients across the cycling chamber. Electrical current is supplied to the heaters through positive **712** and ground **711** leads.

Figure 25 is a cross-sectional view of a cycling chamber, bond layers, and resistive heater. The fluidics disk **701** is mated to a 0.1mm thick mylar sheet **726** (ICI part # ST505) using double sided tape **727** (3M part # 7953MP). The double sided tape is removed from the area under the reaction chamber to minimize reaction contamination from the tape. The mylar layer **726** is mated to the electrical circuit layer **710** using double sided tape **723.** These two layers are radially aligned to ensure that the reaction chamber array lines up with the resistive heater array. A thermally conductive elastomer **724** (Bergquist part # CPU Pad) is inserted between the resistive heater **713** and mylar sheet **726** to minimize possible thermal gradients across the cycling chamber. A 0.1mm thermocouple **725** (Omega part # CHAL 005 - type K), to be used for temperature cycling control, is inserted between the mylar sheet **726** and conductive elastomer **724**. The electrical circuit layer **710** is mated to a bottom polycarbonate support disk **721** using double sided tape **722.**

The microfluidic structures were manufactured through machining of polycarbonate disks using a Light Machines VMC5000 milling machine running "Benchman" software (Light Machines Corporation, Manchester, NH). Structures were designed using a computer drafting program and converted to computer machine code. The disk was cleaned with ethanol and then air, then polished by exposure to vapor from boiling methylene chloride to remove surface imperfections.

The electrical circuit disk was fabricated with screen-printing techniques known by those skilled in the art and also specifically disclosed in 6,063,589. Carbon-based resistive ink (Dupont, 7102 / 7082 blend) was used to print the resistive heaters, and silver-based ink (Dupont, 5028) was used to print the conductive leads onto 0.1mm thick mylar sheet.

The instrument used for controlling the rotational profile and thermal cycling consisted of a personal computer, interface electronics between the PC and a servo-controlled drive motor and interface electronics between the PC and the screen-printed circuit. For this example, the spindle is driven by a servo-controlled DC motor with encoder (Micromo, 3557K012CR). A serial port converter (J. R. Kerr, Z232-485) and motor control board (J. R. Kerr, PIC-SERVO) provide a communication interface between the PC and motor. A slip-ring (Litton, AC6023-24) provided the electrical connection between the rotating platform and the stationary control system. The temperature-dependent voltage measured by the thermocouple was converted to current using a miniature transmitter (Omega part # TX91A) and output through the slip ring. This current was converted to a voltage and read with a commercially available analog/digital board (Computer Boards part # CIO-DAS1600) within the PC. The voltage across the resistive heater was also applied through the slip-ring and was varied to drive the temperature to the desired temperature.

A constant power control loop was used to control reaction chamber temperature. Empirical data showed that to maintain temperatures from 60C to 100C required power from 0.4W to 1.2W. In this example, the PC software control program read the thermocouple temperature and output a control voltage proportional to the setpoint temperature. This voltage was input to a constant power circuit, which was in series with the resistive heater. As temperature increased, heater resistance increased. To maintain constant power, the circuit decreased its output current. Cooling at zero power was provided by convection from the exposed surfaces of the platform and was aided by rotating the disk at a constant speed of 500 rpm. Heating rates were as high as 1.5C/sec and cooling rates were 1.0C/sec.

The disk was mounted on to the motor spindle through a center hole in the disc 705. The slip ring was secured to the top of the disk using a screw. The slip ring lined up with the electric circuit layer so that the appropriate power control and temperature measurement leads were connected.

The solutions PCR consisted of deionized water, *E. coli* genomic template (Sigma, St. Louis, MO), primer set EBGA that amplifies a 215 base pair portion of the beta-galactosidase codon of the *E. coli* genomic DNA (Research Genetics) and Ready-to-Go beads (Amersham Pharmacia). The EBGA forward sequence is given by 5'-ACCTGCATCACCAGCTGCTT-3' (SEQ ID No.: 7) and the EBGA reverse sequence is given by 5'-CGATGATCCTCATTGCTTATTCTC-3' (SEQ ID No.: 8). Denaturation, annealing, extension temperatures were chosen to be 95°C, 60°C and 72°C, respectively. The PC software setpoints were 100°C, 60°C, and 72°C. The difference between setpoint and obtained temperatures is expected based on the location of the thermocouple beneath the reaction chamber and the temperature gradient through the disk.

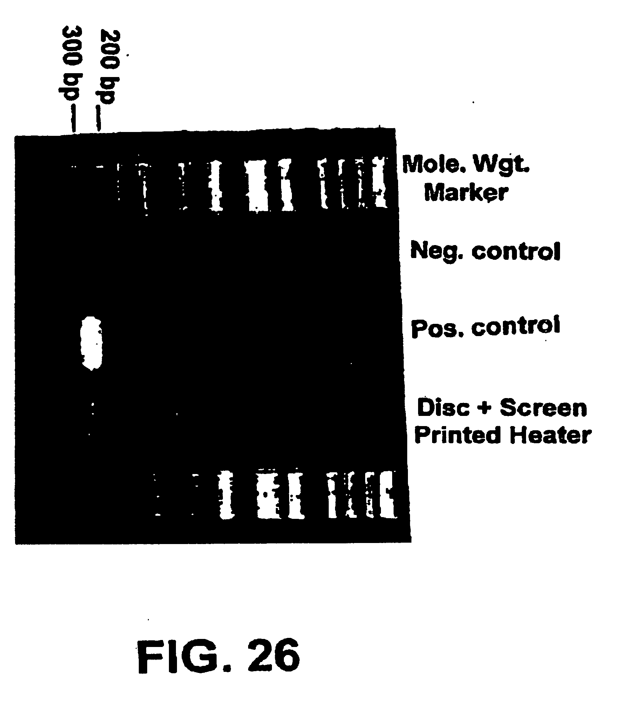

Figure 26 shows the gel electrophoresis output after running 30 cycles in this system. The results compare favorably with amplification performed on a commercial thermal cycler (MJ Research model # PTC-100), also shown in this gel.

It should be understood that the foregoing disclosure emphasizes certain specific embodiments of the invention.

## Claims

1. A centripetally-motivated microsystems platform comprising:

   a) a platen (721) comprising a first substrate bearing one or a multiplicity of temperature control elements (713), wherein each of the temperature control elements (713) is electrically connected to at least two electrical leads (711,712), and wherein the electrical leads are connected to a power source through a slip ring (510), and
   b) a rotatable platform (701) comprising a second substrate having a surface comprising one or a multiplicity of microfluidics structures embedded in the surface of the platform, wherein each microfluidics structure comprises

   i) a sample input port (1015) fluidly connected to
   ii) a chamber (703) in thermal contact with a temperature control element (713) of the first substrate, and
   iii) a sample outlet port (1055),

   wherein at least one temperature control element (713) of the first substrate changes or maintains the temperature of a fluid in a microfluidics structure (703) of the second substrate to be greater than the ambient temperature, and wherein the at least one temperature control element (713) maintains or changes the temperature of the fluid in the microfluidics structure (703) also during rotation of the platform, and wherein the second substrate comprising the sample input port (1015), the chamber (703) and the sample outlet port (1055) is separate from the platen (721) and wherein each temperature control element (713) is in thermal contact with a microfluidics structure (703) in the second substrate.

2. The microsystems platform of claim 1, wherein the temperature control element (713) is a resistive heater (1108) or a Peltier element (554,558).

3. The microsystems platform of claims 1 or 2, further comprising a temperature sensing element (725) in thermal contact with a microfluidics structure (703) or the temperature control element (713) or both.

4. The microsystems platform according to claim 3, wherein the temperature sensing element (725) is a thermistor (606,611).

5. The microsystems platform of one of claims 1 to 4, wherein at least one temperature control element (713) is in thermal contact with a chamber (703) in the substrate in the second substrate.

6. The microsystems platform according to one of the preceding claims, wherein the first substrate is a printed circuit board (551).

7. The microsystems platform of claim 6, wherein the temperature control element (713) further comprises one or a multiplicity of metal contact plates in thermal contact with a heating element.

8. The microsystems platform of claim 7, wherein at least one metal contact plate is in thermal contact with the chamber (703).

9. The microsystems platform of one of claims 7 or 8, wherein at least one metal contact plate is in thermal contact with a heat sink (652).

10. The microsystems platform of one of the claims 5 to 9, wherein the temperature of a fluid in the chamber (703) can be changed at a rate sufficient for performing an *in vitro* amplification reaction, in particular a polymerase chain reaction.

11. The microsystems platform of one of the preceding claims that is a circular disk.

12. A microsystems platform according to any one of claims 5 to 11, wherein the chamber (703) in thermal contact with a temperature control element (713) is a cell lysis chamber (1005) comprising a filter element (1009) having a porosity that retains cell debris, precipitated proteins, and nucleic acids in the chamber, the cell lysis chamber (1005) being fluidly connected to the sample input port (1015) and the microfluidics structure further comprises

    i) a lysis buffer reservoir (1016) containing a lysis buffer, fluidly connected to the cell lysis chamber (1005) by a microchannel (1017);
    ii) a precipitation buffer reservoir (1020), fluidly connected to the cell lysis chamber by a microchannel (1023) that comprises a sacrificial valve (1021);
    iii) a DNA binding chamber (1027), fluidly connected to the cell lysis chamber (1005) by a microchannel (1026), wherein the microchannel is interrupted by a sacrificial valve (1012), wherein the DNA binding chamber further comprises a DNA binding filter (1029) having a binding affinity for DNA;
    iv) one or a multiplicity of wash buffer reservoirs (1036,1047), wherein each reservoir contains a wash buffer, and wherein each reservoir is fluidly connected to the DNA binding chamber (1027) by a microchannel (1039,1050) that is interrupted by a sacrificial valve (1037,1048);
    v) a waste reservoir (1034) fluidly connected to the DNA binding chamber by a microchannel (1033);
    vi) a sample recovery chamber (1053), fluidly connected to the DNA binding chamber (1027) by a microchannel (1030) interrupted by a sacrificial valve (1032); and
    vii) an elution buffer reservoir (1042), fluidly connected to the DNA binding chamber by a microchannel (1044) interrupted by a sacrificial valve (1058);

wherein fluid flow through the microfluidic structures is motivated by centripetal force resulting from rotation of the platform and fluid flow through microchannels interrupted by sacrificial valves is dependent on the integrity of these valves.

13. The microsystems platform of claim 12, wherein the cell lysis chamber (1005) has a volumetric capacity of from 50 $\mu$l to 1000 $\mu$l.

14. The microsystems platform of claim 12, wherein the lysis buffer reservoir **(1016)** has a volumetric capacity of from 25 $\mu$l to 300 $\mu$l.

15. The microsystems platform of claim 12, wherein the precipitation buffer reservoir (1020) has a volumetric capacity of from 35 $\mu$l to 400 $\mu$l.

16. The microsystems platform of claim 12, wherein each of the wash buffer reservoirs (1036,1047) has a volumetric capacity of from 50 $\mu$l to 850 $\mu$l.

17. The microsystems platform of claim 12, wherein the elution buffer reservoir (1042) has a volumetric capacity of from 20 $\mu$l to 250 $\mu$l.

18. The microsystems platform of claim 12, wherein the waste reservoir (1034) has a volumetric capacity of from 350 $\mu$l to 1500 $\mu$l.

19. The microsystems platform of claim 12, wherein the DNA binding chamber (1027) has a volumetric capacity of from 5 $\mu$l to 20 $\mu$l.

20. The microsystems platform of claim 12, wherein the sample collection chamber (1053) has a volumetric capacity of from 20 $\mu$l to 250 $\mu$l.

21. The microsystems platform of claim 12, wherein the sample recovery chamber (1053) further comprises the sample outlet port (1055).

22. The microsystems platform of claim 12, wherein the cell lysis chamber (1005) further comprises one or a multiplicity of mixing baffles (1006).

23. The microsystems platform of claim 12, wherein the filter element (1009) contained in the cell lysis chamber (1005) is positioned proximal to the microchannel connecting the cell lysis chamber to the DNA binding chamber (1027), wherein fluid must flow through the filter to enter the microchannel.

24. The microsystems platform of claim 12, wherein the DNA binding filter (1029) contained in the DNA binding chamber (1027) is positioned proximal to the microchannel (1030) connecting the DNA binding chamber to the waste reservoir (1034) and the sample collection chamber (1053), wherein fluid must flow through the filter to enter the microchannel.

25. The microsystems platform of claim 12, wherein the microchannel (1030) connecting the DNA binding chamber (1027) to the waste reservoir (1034) is the same microchannel that connects the DNA binding chamber (1027) to the sample collection chamber (1053), wherein fluid flows through the portion of the microchannel fluidly connected to the waste reservoir (1034) only when the sacrificial valve (1032) interrupting the portion of the microchannel (1030) fluidly connecting the DNA binding chamber (1027) to the sample collection chamber (1053) is intact.

26. The microsystems platform of claim 12, wherein each of the sacrificial valves (1012,1021,1032,1037,1048,1058) is a wax valve that is in thermal contact with a heating element (1108) capable of producing sufficient heat to melt the wax and open the valve.

27. The microsystems platform according to claim 26, wherein each sacrificial valve further comprises a recrystallization chamber (1013,1022,1038, 1043,1049) having a cross-sectional dimension sufficient to contain the wax comprising the wax valve and permit fluid flow through the microchannel.

28. The microsystems platform of claim 12, wherein the cell lysis chamber (1005) is in thermal contact with a heating element (1108).

29. A microsystems platform according to any one of claims 5 to 11 for performing an *in vitro* amplification reaction comprising:

> i) a sample chamber (204) comprising the sample input port (207);
> ii) a cell lysis buffer reservoir (205) containing a cell lysis buffer;
> iii) a neutralization buffer reservoir (206) containing a neutralization buffer being fluidly connected to a first reservoir (219) by a microchannel ;
> iv) a first mixing microchannel (216) fluidly connected to the sample chamber (204) and the cell lysis buffer reservoir (205), wherein the first mixing microchannel defines a longitudinal path in the surface of the platform having a length sufficient to mix a sample and the cell lysis buffer to a lysed cell mixture, wherein the first mixing microchannel (216) is fluidly connected to a
> v) second reservoir (217), wherein the first and second reservoirs (219,217) are fluidly connected to a
> vi) second mixing microchannel (229), wherein the second mixing microchannel defines a longitudinal path in the surface of the platform having a length sufficient to mix the lysed cell mixture and the neutralization buffer to a DNA sample mixture, wherein the second mixing microchannel is fluidly connected to a
> vii) third reservoir (230); wherein the platform further comprises
> viii) a fourth reservoir (236) containing a solution comprising a DNA amplification reagent mixture, wherein the third and fourth reservoirs (230,236) are fluidly connected to
> ix) a third mixing microchannel (234) wherein the third mixing micro-channel defines a longitudinal path in the surface of the platform having a length sufficient to mix the DNA sample mixture and the DNA amplification reagent mixture to produce a DNA amplification reaction mixture, wherein the third mixing microchannel (234) is fluidly connected to the chamber (241) in thermal contact with the temperature control element (713),

whereby fluid within the microchannels of the platform is moved through said microchannels by centripetal force arising from rotational motion of the platform for a time and a rotational velocity sufficient to move the fluid through the microchannels, and wherein DNA amplification is performed in the thermal cycling chamber (241) by alternating the temperature to denature template DNA, anneal primers and extend the primers with a polymerase.

**30.** The microsystems platform of claim 29, wherein the sample chamber (204) has a volumetric capacity of from 2 nl to 1000 μl.

**31.** The microsystems platform of claim 29, wherein the cell lysis buffer reservoir (205) has a volumetric capacity of from 2 nl to 1000 μl.

**32.** The microsystems platform of claim 29, wherein the neutralization buffer reservoir (206) has a volumetric capacity of from 2 nl to 1000 μl.

**33.** The microsystems platform of claim 29, wherein each of the first, second, third, and fourth reservoirs has a volumetric capacity of from 2 nl to 1000 μl.

**34.** The microsystems platform of claim 29, wherein the cell lysis buffer reservoir (205), the neutralization buffer reservoir (206) and the third and fourth reservoirs (230,236) each further comprise an input port (231,239).

**35.** The microsystems platform of claim 29, wherein each mixing microchannel comprises a plurality of bends having angles greater than 90°.

**36.** The microsystems platform of claim 29, wherein the flow rate of fluid through each of the mixing microchannels is from 1nl/s to 100 μl/s.

**37.** The microsystems platform of claim 29, wherein the thermal cycling chamber (241) further comprises a sample outlet port.

**38.** The microsystems platform of one of claims 12 or 29, wherein the interior surfaces of the microfluidic structures are coated with parylene.


**Patentansprüche**

**1.** Mikrosystem-Plattform mit zentripetalem Antrieb, umfassend:

a) eine Platte (721), umfassend ein erstes Substrat, das ein oder eine Vielzahl von Temperaturregelungselementen (713) trägt, wobei jedes der Temperaturregelungselemente (713) elektrisch mit mindestens zwei elektrischen Leitungen (711,712) verbunden ist und wobei die elektrischen Leitungen durch einen Gleitring (510) mit einer Stromquelle verbunden sind, und
b) eine drehbare Plattform (701), umfassend ein zweites Substrat mit einer Oberfläche, die eine oder eine Vielzahl von Mikrofluidik-Strukturen umfasst, welche in die Oberfläche der Plattform eingebettet sind, wobei jede Mikrofluidik-Struktur umfasst:

i) eine Probeneinlassöffnung (1015) in Fluidverbindung mit
ii) einer Kammer (703) in thermischem Kontakt mit einem Temperaturregelungselement (713) des ersten Substrats, und
iii) eine Probenauslassöffnung (1055),

wobei mindestens ein Temperaturregelungselement (713) des ersten Substrats die Temperatur eines Fluids in einer Mikrofluidik-Struktur (703) des zweiten Substrats verändert oder aufrechterhält, so dass sie höher als die Umgebungstemperatur ist, und wobei das mindestens eine Temperaturregelungselement (713) die Temperatur des Fluids in der Mikrofluidik-Struktur (703) auch während der Drehung der Plattform aufrechterhält oder verändert, und wobei das zweite Substrat, das die Probeneinlassöffnung (1015), die Kammer (703) und die Probenauslassöffnung (1055) umfasst, von der Platte (721) getrennt ist, und wobei jedes Temperaturregelungselement (713) in thermischem Kontakt mit einer Mikrofluidik-Struktur (703) in dem zweiten Substrat ist.

**2.** Mikrosystem-Plattform nach Anspruch 1, wobei das Temperaturregelungselement (713) ein Heizwiderstand (1108) oder ein Peltierelement (554,558) ist.

**3.** Mikrosystem-Plattform nach Anspruch 1 oder 2, darüber hinaus umfassend ein Temperaturfühlelement (725) in thermischem Kontakt mit einer Mikrofluidik-Struktur (703) oder dem Temperaturregelungselement (713) oder beiden.

4. Mikrosystem-Plattform nach Anspruch 3, wobei das Temperaturfühlelement (725) ein Thermistor (606,611) ist.

5. Mikrosystem-Plattform nach einem der Ansprüche 1 bis 4, wobei mindestens ein Temperaturregelungselement (713) in thermischem Kontakt mit einer Kammer (703) in dem Substrat im zweiten Substrat ist.

6. Mikrosystem-Plattform nach einem der vorhergehenden Ansprüche, wobei das erste Substrat eine gedruckte Leiterplatte (551) ist.

7. Mikrosystem-Plattform nach Anspruch 6, wobei das Temperaturregelungselement (713) darüber hinaus eine oder eine Vielzahl von Metallkontaktplatten umfasst, die sich in thermischem Kontakt mit einem Heizelement befinden.

8. Mikrosystem-Plattform nach Anspruch 7, wobei sich mindestens eine Metallkontaktplatte in thermischem Kontakt mit der Kammer (703) befindet.

9. Mikrosystem-Plattform nach einem der Ansprüche 7 oder 8, wobei sich mindestens eine Metallkontaktplatte in thermischem Kontakt mit einem Kühlkörper (652) befindet.

10. Mikrosystem-Plattform nach einem der Ansprüche 5 bis 9, wobei die Temperatur eines Fluids in der Kammer (703) mit einer Geschwindigkeit verändert werden kann, die ausreichend ist, um eine *in vitro*-Amplifikationsreaktion, insbesondere eine Polymerase-Kettenreaktion, durchzuführen.

11. Mikrosystem-Plattform nach einem der vorhergehenden Ansprüche, die eine kreisförmige Scheibe ist.

12. Mikrosystem-Plattform nach einem der Ansprüche 5 bis 11, wobei die Kammer (703), die sich in thermischem Kontakt mit einem Temperaturregelungselement (713) befindet, eine Zelllysekammer (1005) ist, die ein Filterelement (1009) umfasst, welches eine Porosität aufweist, die Zelltrümmer, ausgefällte Proteine und Nukleinsäuren in der Kammer zurückhält, wobei die Zelllysekammer (1005) in Fluidverbindung mit der Probeneinlassöffnung (1015) steht und die Mikrofluidik-Struktur darüber hinaus umfasst:

    i) einen Lysepufferspeicher (1016), der einen Lysepuffer enthält und über einen Mikrokanal (1017) in Fluidverbindung mit der Zelllysekammer (1005) steht;
    ii) einen Präzipitationspufferspeicher (1020), der durch einen Mikrokanal (1023), der ein eliminierbares Ventil (1021) umfasst, mit der Zelllysekammer in Fluidverbindung steht;
    iii) eine DNA-Bindungskammer (1027), die durch einen Mikrokanal (1026) in Fluidverbindung mit der Zelllysekammer (1005) steht, wobei der Mikrokanal durch ein eliminierbares Ventil (1012) unterbrochen wird, wobei die DNA-Bindungskammer darüber hinaus einen DNA-Bindungsfilter (1029) mit einer Bindungsaffinität für DNA umfasst;
    iv) einen oder eine Vielzahl von Waschpufferspeichern (1036,1047), wobei jeder Speicher einen Waschpuffer enthält und wobei jeder Speicher durch einen Mikrokanal (1039,1050), der durch ein eliminierbares Ventil (1037,1048) unterbrochen ist, mit der DNA-Bindungskammer (1027) in Fluidverbindung steht;
    v) einen Abfallspeicher (1034), der durch einen Mikrokanal (1033) in Fluidverbindung mit der DNA-Bindungskammer steht;
    vi) eine Probenrückgewinnungskammer (1053), die durch einen Mikrokanal (1030), der durch ein eliminierbares Ventil (1032) unterbrochen ist, mit der DNA-Bindungskammer (1027) in Fluidverbindung steht; und
    vii) einen Elutionspufferspeicher (1042), der durch einen Mikrokanal (1044), der durch ein eliminierbares Ventil (1058) unterbrochen ist, mit der DNA-Bindungskammer in Fluidverbindung steht;

wobei der Fluidstrom durch die Mikrofluidik-Strukturen durch die Zentripetalkraft bewegt wird, die aus der Drehung der Plattform resultiert, und der Fluidstrom, durch die Mikrokanäle, die durch die eliminierbaren Ventile unterbrochen werden, von der Intaktheit dieser Ventile abhängt.

13. Mikrosystem-Plattform nach Anspruch 12, wobei die Zelllysekammer (1005) ein Fassungsvermögen von 50 $\mu$l bis 1'000 $\mu$l aufweist.

14. Mikrosystem-Plattform nach Anspruch 12, wobei der Lysepufferspeicher (1016) ein Fassungsvermögen von 25 $\mu$l bis 300 $\mu$l aufweist.

15. Mikrosystem-Plattform nach Anspruch 12, wobei der Präzipitationspufferspeicher (1020) ein Fassungsvermögen

von 35 μl bis 400 μl aufweist.

16. Mikrosystem-Plattform nach Anspruch 12, wobei jeder der Waschpufferspeicher (1036,1047) ein Fassungsvermögen von 50 μl bis 850 μl aufweist.

17. Mikrosystem-Plattform nach Anspruch 12, wobei der Elutionspufferspeicher (1042) ein Fassungsvermögen von 20 μl bis 250 μl aufweist.

18. Mikrosystem-Plattform nach Anspruch 12, wobei der Abfallspeicher (1034) ein Fassungsvermögen von 350 μl bis 1'500 μl aufweist.

19. Mikrosystem-Plattform nach Anspruch 12, wobei die DNA-Bindungskammer (1027) ein Fassungsvermögen von 5 μl bis 20 μl aufweist.

20. Mikrosystem-Plattform nach Anspruch 12, wobei die Probensammelkammer (1053) ein Fassungsvermögen von 20 μl bis 250 μl aufweist.

21. Mikrosystem-Plattform nach Anspruch 12, wobei die Probenrückgewinnungskammer (1053) darüber hinaus die Probenauslassöffnung (1055) umfasst.

22. Mikrosystem-Plattform nach Anspruch 12, wobei die Zelllysekammer (1005) darüber hinaus eine oder eine Vielzahl von Ablenkplatten zum Mischen (1006) umfasst.

23. Mikrosystem-Plattform nach Anspruch 12, wobei das in der Zelllysekammer (1005) enthaltene Filterelement (1009) proximal zum Mikrokanal angeordnet ist, der die Zelllysekammer mit der DNA-Bindungskammer (1027) verbindet, wobei das Fluid durch den Filter strömen muss, um in den Mikrokanal einzudringen.

24. Mikrosystem-Plattform nach Anspruch 12, wobei der in der DNA-Bindungskammer (1027) enthaltene DNA-Bindungsfilter (1029) proximal zum Mikrokanal (1030) angeordnet ist, der die DNA-Bindungskammer mit dem Abfallspeicher (1034) und der Probensammelkammer (1053) verbindet, wobei das Fluid durch den Filter strömen muss, um in den Mikrokanal einzudringen.

25. Mikrosystem-Plattform nach Anspruch 12, wobei der Mikrokanal (1030), der die DNA-Bindungskammer (1027) mit dem Abfallspeicher (1034) verbindet, derselbe Mikrokanal ist, der die DNA-Bindungskammer (1027) mit der Probensammelkammer (1053) verbindet, wobei das Fluid nur dann durch den Teil des Mikrokanals strömt, der in Fluidverbindung mit dem Abfallspeicher (1034) steht, wenn das eliminierbare Ventil (1032), das den Teil des Mikrokanals (1030) unterbricht, der die DNA-Bindungskammer (1027) in Fluidverbindung mit der Probensammelkammer (1053) bringt, intakt ist.

26. Mikrosystem-Plattform nach Anspruch 12, wobei jedes der eliminierbaren Ventile (1012,1021,1032,1037,1048,1058) ein Wachsventil ist, das in thermischem Kontakt mit einem Heizelement (1108) steht, das geeignet ist, ausreichende Hitze zu erzeugen, um das Wachs zu schmelzen und das Ventil zu öffnen.

27. Mikrosystem-Plattform nach Anspruch 26, wobei jedes eliminierbare Ventil darüber hinaus eine Rekristallisationskammer (1013,1022,1038, 1043,1049) umfasst, dessen Abmessung im Querschnitt ausreichend ist, um das Wachs aufzunehmen, das das Wachsventil umfasst, und um den Fluidstrom durch den Mikrokanal zu ermöglichen.

28. Mikrosystem-Plattform nach Anspruch 12, wobei sich die Zelllysekammer (1005) in thermischem Kontakt mit einem Heizelement (1108) befindet.

29. Mikrosystem-Plattform nach einem der Ansprüche 5 bis 11 zur Durchführung einer *in vitro*-Amplifikationsreaktion, umfassend:

    i) eine Probenkammer (204), welche die Probeneinlassöffnung (207) umfasst;
    ii) einen Zelllysepufferspeicher (205), der einen Zelllysepuffer enthält;
    iii) einen Neutralisierungspufferspeicher (206), der einen Neutralisierungspuffer umfasst und durch einen Mikrokanal in Fluidverbindung mit einem ersten Speicher (219) steht;
    iv) einen ersten Misch-Mikrokanal (216) der mit der Probenkammer (204) und dem Zelllysepufferspeicher (205) in Fluidverbindung steht, wobei der erste Misch-Mikrokanal einen Längspfad in der Oberfläche der Plattform definiert, der eine ausreichende Länge aufweist, um eine Probe und den Zelllysepuffer zu einer lysierten Zellmischung zu mischen, wobei der erste Misch-Mikrokanal (216) in Fluidverbindung steht mit einem

v) zweiten Speicher (217), wobei die ersten und zweiten Speicher (219,217) in Fluidverbindung stehen mit einem

vi) zweiten Misch-Mikrokanal (229), wobei der zweite Misch-Mikrokanal einen Längspfad in der Oberfläche der Plattform definiert, der eine ausreichende Länge aufweist, um die lysierte Zellmischung und den Neutralisierungspuffer zu einer DNA-Probenmischung zu mischen, wobei der zweite Misch-Mikrokanal in Fluidverbindung steht mit einem

vii) dritten Speicher (230); wobei die Plattform darüber hinaus umfasst:

viii) einen vierten Speicher (236), der eine Lösung enthält, die eine Reagenzienmischung zur DNA-Amplifikation umfasst, wobei die dritten und vierten Speicher (230,236) in Fluidverbindung stehen mit

ix) einem dritten Misch-Mikrokanal (234), wobei der dritte Misch-Mikrokanal einen Längspfad in der Oberfläche der Plattform definiert, der eine ausreichende Länge aufweist, um die DNA-Probenmischung und die Reagenzienmischung zur DNA-Amplifikation zu mischen, um eine Reaktionsmischung zur DNA-Amplifikation zu bilden, wobei der dritte Misch-Mikrokanal (234) in Fluidverbindung mit der Kammer (241) steht, die sich in thermischem Kontakt mit dem Temperaturregelungselement (713) befindet,

wobei das Fluid in den Mikrokanälen der Plattform durch die aus der Drehbewegung der Plattform resultierende Zentripetalkraft durch die Mikrokanäle bewegt wird, und zwar für eine Dauer und mit einer Drehgeschwindigkeit, die ausreichend sind, um das Fluid durch die Mikrokanäle zu bewegen, und wobei die DNA-Amplifikation in der Thermozyklus-Kammer (241) durchgeführt wird, indem die Temperatur periodisch geändert wird, um die Template-DNA zu denaturieren, ein Primer-Annealing durchzuführen und die Primer mit einer Polymerase zu erweitern.

30. Mikrosystem-Plattform nach Anspruch 29, wobei die Probenkammer (204) ein Fassungsvermögen von 2 nl bis 1'000 μl aufweist.

31. Mikrosystem-Plattform nach Anspruch 29, wobei der Zelllysepufferspeicher (205) ein Fassungsvermögen von 2 nl bis 1'000 μl aufweist.

32. Mikrosystem-Plattform nach Anspruch 29, wobei der Neutralisierungspufferspeicher (206) ein Fassungsvermögen von 2 nl bis 1'000 μl aufweist.

33. Mikrosystem-Plattform nach Anspruch 29, wobei jeder der ersten, zweiten, dritten und vierten Speicher ein Fassungsvermögen von 2 nl bis 1'000 μl aufweist.

34. Mikrosystem-Plattform nach Anspruch 29, wobei der Zelllysepufferspeicher (205), der Neutralisierungspufferspeicher (206) und die dritten und vierten Speicher (230,236) jeweils darüber hinaus eine Einlassöffnung (231,239) umfassen.

35. Mikrosystem-Plattform nach Anspruch 29, wobei jeder Misch-Mikrokanal eine Vielzahl von Biegungen umfasst, die Winkel aufweisen, die größer als 90° sind.

36. Mikrosystem-Plattform nach Anspruch 29, wobei die Durchflussgeschwindigkeit des Fluids durch jeden der Misch-Mikrokanäle von 1 nl/s bis 100 μl/s beträgt.

37. Mikrosystem-Plattform nach Anspruch 29, wobei die Thermozyklus-Kammer (241) darüber hinaus eine Probenauslassöffnung umfasst.

38. Mikrosystem-Plattform nach einem der Ansprüche 12 oder 29, wobei die Innenflächen der Mikrofluidik-Strukturen mit Parylen beschichtet sind.

**Revendications**

1. Plate-forme pour micro-systèmes à déplacement centripète, comprenant:

a) un plateau (721) comprenant un premier substrat qui porte un ou plusieurs éléments de commande de température (713), dans lequel chacun des éléments de commande de température (713) est connecté électriquement à au moins deux fils électriques (711,712), et dans lequel les fils électriques sont connectés à une source de courant via une bague collectrice (510), et

b) une plate-forme pivotante (701) comprenant un second substrat qui présente une surface comportant une ou plusieurs structures microfluidiques imbriquées dans la surface de la plate-forme, dans laquelle chaque structure microfluidique comprend:

i) un orifice d'admission d'échantillon (1015), connecté par voie fluide à

ii) une chambre (703), en contact thermique avec un élément de commande de température (713) du premier substrat, et

iii) un orifice de sortie d'échantillon (1055),

dans laquelle au moins un élément de commande de température (713) du premier substrat modifie ou conserve la température d'un fluide dans une structure microfluidique (703) du second substrat de façon à ce qu'elle soit supérieure à la température ambiante, et dans laquelle l'élément de commande de température (713), au moins au nombre de un, conserve ou modifie la température du fluide dans la structure microfluidique (703) également pendant une rotation de la plate-forme, et dans laquelle le second substrat, comportant l'orifice d'admission d'échantillon (1015), la chambre (703) et l'orifice de sortie d'échantillon (1055) est séparé du plateau (721), et dans laquelle chaque élément de commande de température (713) se trouve en contact thermique avec une structure microfluidique (703) du second substrat.

2.  Plate-forme pour micro-systèmes selon la revendication 1, dans laquelle l'élément de commande de température (713) est une résistance chauffante (1108) ou un élément de Peltier (554,558).

3.  Plate-forme pour micro-systèmes selon la revendication 1 ou 2, comprenant en outre un élément de détection de température (725) en contact thermique avec une structure microfluidique (703) ou l'élément de commande de température (713), ou les deux.

4.  Plate-forme pour micro-systèmes selon la revendication 3, dans laquelle l'élément de détection de température (725) est un thermistor (606, 611).

5.  Plate-forme pour micro-systèmes selon l'une des revendications 1 à 4, dans laquelle au moins un élément de commande de température (713) se trouve en contact thermique avec une chambre (703), dans le substrat du second substrat.

6.  Plate-forme pour micro-systèmes selon l'une des revendications précédentes, dans laquelle le premier substrat est une carte à circuits imprimés (551).

7.  Plate-forme pour micro-systèmes selon la revendication 6, dans laquelle l'élément de commande de température (713) comprend en outre une ou plusieurs plaques de contact métalliques en contact thermique avec un élément chauffant.

8.  Plate-forme pour micro-systèmes selon la revendication 7, dans laquelle au moins une plaque de contact métallique se trouve en contact thermique avec la chambre (703).

9.  Plate-forme pour micro-systèmes selon l'une des revendications 7 ou 8, dans laquelle au moins une plaque de contact métallique se trouve en contact thermique avec un dissipateur de chaleur (652).

10. Plate-forme pour micro-systèmes selon l'une des revendications 5 à 9, dans laquelle la température d'un fluide dans la chambre (703) peut être modifiée à une vitesse suffisante pour réaliser une réaction d'amplification *in vitro,* en particulier une réaction en chaîne par la polymérase.

11. Plate-forme pour micro-systèmes selon l'une des revendications précédentes, qui est un disque circulaire.

12. Plate-forme pour micro-systèmes selon l'une quelconque des revendications 5 à 11, dans laquelle la chambre (703) qui se trouve en contact thermique avec un élément de commande de température (713) est une chambre de lyse cellulaire (1005) comportant un élément filtrant (1009) qui présente une porosité permettant de retenir les débris cellulaires, les protéines précipitées et les acides nucléiques dans la chambre, la chambre de lyse cellulaire (1005) étant connectée par voie fluide à l'orifice d'admission d'échantillon (1015), et la structure microfluidique comprenant en outre

i) un réservoir de tampon de lyse (1016) contenant un tampon de lyse, connecté par voie fluide à la chambre de lyse cellulaire (1005) par un micro-canal (1017);

ii) un réservoir de tampon de précipitation (1020), connecté par voie fluide à la chambre de lyse cellulaire par un micro-canal (1023) qui comporte une soupape sacrificielle (1021) ;

iii) une chambre de liaison à l'ADN (1027), connectée par voie fluide à la chambre de lyse cellulaire (1005) par un micro-canal (1026), où le micro-canal est interrompu par une soupape sacrificielle (1012), où la chambre de liaison à l'ADN comprend en outre un filtre de liaison à l'ADN (1029) possédant une affinité de liaison à l'ADN ;

iv) un ou plusieurs réservoirs de tampon de lavage (1036,1047), où chaque réservoir contient un tampon de lavage, et où chaque réservoir est connecté par voie fluide à la chambre de liaison à l'ADN (1027) par un micro-canal (1039,1050) qui est interrompu par une soupape sacrificielle (1037,1048) ;

v) un réservoir de déchets (1034), connecté par voie fluide à la chambre de liaison à l'ADN par un micro-canal (1033) ;

vi) une chambre de collecte d'échantillon (1053), connectée par voie fluide à la chambre de liaison à l'ADN (1027) par un micro-canal (1030) interrompu par une soupape sacrificielle (1032) ; et

vii) un réservoir de tampon d'élution (1042), connecté par voie fluide à la chambre de liaison à l'ADN par un micro-canal (1044) interrompu par une soupape sacrificielle (1058) ;

dans laquelle l'écoulement de fluide à travers les structures microfluidiques est motivé par la force centripète résultant de la rotation de la plate-forme, et l'écoulement du fluide à travers les micro-canaux interrompu par les soupapes sacrificielles dépend de l'intégrité de ces soupapes.

13. Plate-forme pour micro-systèmes selon la revendication 12, dans laquelle la chambre de lyse cellulaire (1005) a une capacité comprise entre 50 µl et 1 000 µl.

14. Plate-forme pour micro-systèmes selon la revendication 12, dans laquelle le réservoir de tampon de lyse (1016) a une capacité comprise entre 25 µl et 300 µl.

15. Plate-forme pour micro-systèmes selon la revendication 12, dans laquelle le réservoir de tampon de précipitation (1020) a une capacité comprise entre 35 µl et 400 µl.

16. Plate-forme pour micro-systèmes selon la revendication 12, dans laquelle chacun des réservoirs de tampon de lavage (1036,1047) a une capacité comprise entre 50 µl et 850 µl.

17. Plate-forme pour micro-systèmes selon la revendication 12, dans laquelle le réservoir de tampon d'élution (1042) a une capacité comprise entre 20 µl et 250 µl.

18. Plate-forme pour micro-systèmes selon la revendication 12, dans laquelle le réservoir de déchets (1034) a une capacité comprise entre 350 µl et 1 500 µl.

19. Plate-forme pour micro-systèmes selon la revendication 12, dans laquelle la chambre de liaison à l'ADN (1027) a une capacité comprise entre 5 µl et 20 µl.

20. Plate-forme pour micro-systèmes selon la revendication 12, dans laquelle la chambre de collecte d'échantillon (1053) a une capacité comprise entre 20 µl et 250 µl.

21. Plate-forme pour micro-systèmes selon la revendication 12, dans laquelle la chambre de collecte d'échantillon (1053) comprend en outre un orifice de sortie d'échantillon (1055).

22. Plate-forme pour micro-systèmes selon la revendication 12, dans laquelle la chambre de lyse cellulaire (1005) comprend de plus une ou plusieurs chicanes de mélange (1006).

23. Plate-forme pour micro-systèmes selon la revendication 12, dans laquelle l'élément filtrant (1009) contenu dans la chambre de lyse cellulaire (1005) est positionné à proximité du micro-canal connectant la chambre de lyse cellulaire à la chambre de liaison à l'ADN (1027), le fluide devant s'écouler à travers le filtre pour pénétrer dans le micro-canal.

24. Plate-forme pour micro-systèmes selon la revendication 12, dans laquelle le filtre de liaison à l'ADN (1029) contenu dans la chambre de liaison à l'ADN (1027) est positionné à proximité du micro-canal (1030) connectant la chambre de liaison à l'ADN au réservoir de déchets (1034) et à la chambre de collecte d'échantillon (1053), le fluide devant s'écouler à travers le filtre pour pénétrer dans le micro-canal.

25. Plate-forme pour micro-systèmes selon la revendication 12, dans laquelle le micro-canal (1030) connectant la chambre de liaison à l'ADN (1027) au réservoir de déchets (1034) est le même micro-canal qui connecte la chambre de liaison à l'ADN (1027) à la chambre de collecte d'échantillon (1053), le fluide s'écoulant à travers la portion du micro-canal connectée par voie fluide au réservoir de déchets (1034) uniquement lorsque la soupape sacrificielle (1032), qui interrompt la portion du micro-canal (1030) connectant par voie fluide la chambre de liaison à l'ADN (1027) à la chambre de collecte d'échantillon (1053), est intacte.

26. Plate-forme pour micro-systèmes selon la revendication 12, dans laquelle chacune des soupapes sacrificielles (1012,1021,1032,1037, 1048,1058) est une soupape de cire qui se trouve en contact thermique avec un élément chauffant (1108) capable de produire une chaleur suffisante pour fondre la cire et ouvrir la soupape.

27. Plate-forme pour micro-systèmes selon la revendication 26, dans laquelle chaque soupape sacrificielle comprend en outre une chambre de recristallisation (1013, 1022, 1038, 1043, 1049) qui possède une dimension en coupe transversale suffisante pour contenir la cire formant la soupape de cire et permettre l'écoulement du fluide à travers le micro-canal.

28. Plate-forme pour micro-systèmes selon la revendication 12, dans laquelle la chambre de lyse cellulaire (1005) se trouve en contact thermique avec un élément chauffant (1108).

29. Plate-forme pour micro-systèmes selon l'une quelconque des revendications 5 à 11 pour réaliser une réaction d'amplification *in vitro,* comportant :

   i) une chambre d'échantillon (204) qui comprend l'orifice d'admission d'échantillon (207) ;
   ii) un réservoir de tampon de lyse cellulaire (205) contenant un tampon de lyse cellulaire ;
   iii) un réservoir de tampon de neutralisation (206) qui contient un tampon de neutralisation qui est connecté par voie fluide à un premier réservoir (219) par un micro-canal ;
   iv) un premier micro-canal de mélange (216) connecté par voie fluide à la chambre d'échantillon (204) et au réservoir de tampon de lyse cellulaire (205), où le premier micro-canal de mélange définit une trajectoire longitudinale dans la surface de la plate-forme qui présente une longueur suffisante pour mélanger un échantillon et le tampon de lyse cellulaire en un mélange de cellules lysées, où le premier micro-canal de mélange (216) est connecté par voie fluide à
   v) un second réservoir (217), où les premier et second réservoirs (219,217) sont connectés par voie fluide à
   vi) un second micro-canal de mélange (229), où le second micro-canal de mélange définit une trajectoire longitudinale dans la surface de la plate-forme qui présente une longueur suffisante pour mélanger le mélange de cellules lysées et le tampon de neutralisation en un mélange d'échantillon d'ADN, où le second micro-canal de mélange est connecté par voie fluide à
   vii) un troisième réservoir (230) ; dans laquelle la plate-forme comprend en outre
   viii) un quatrième réservoir (236) qui contient une solution comprenant un mélange de réactif d'amplification d'ADN, les troisième et quatrième réservoirs (230,236) étant connectés par voie fluide à
   ix) un troisième micro-canal de mélange (234), dans lequel le troisième micro-canal de mélange définit une trajectoire longitudinale dans la surface de la plate-forme qui présente une longueur suffisante pour mélanger le mélange d'échantillon d'ADN et le mélange de réactif d'amplification d'ADN pour produire un mélange réactionnel d'amplification d'ADN, où le troisième micro-canal de mélange (234) est connecté par voie fluide à la chambre (241) en contact thermique avec l'élément de commande de température (713),

   suite à quoi le fluide au sein des micro-canaux de la plate-forme est déplacé à travers lesdits micro-canaux par la force centripète découlant du déplacement en rotation de la plate-forme pendant une durée et selon une vitesse suffisantes pour déplacer le fluide à travers les micro-canaux, l'amplification de l'ADN étant réalisée dans la chambre à cycle thermique (241) en alternant la température pour dénaturer l'ADN matrice, apparier les amorces et étendre les amorces avec une polymérase.

30. Plate-forme pour micro-systèmes selon la revendication 29, dans laquelle la chambre d'échantillon (204) a une capacité comprise entre 2 nl et 1 000 μl.

**31.** Plate-forme pour micro-systèmes selon la revendication 29, dans laquelle le réservoir de tampon de lyse cellulaire (205) a une capacité comprise entre 2 nl et 1 000 μl.

**32.** Plate-forme pour micro-systèmes selon la revendication 29, dans laquelle le réservoir de tampon de neutralisation (206) a une capacité comprise entre 2 nl et 1 000 μl.

**33.** Plate-forme pour micro-systèmes selon la revendication 29, dans laquelle chacun des premier, second, troisième et quatrième réservoirs a une capacité comprise entre 2 nl et 1 000 μl.

**34.** Plate-forme pour micro-systèmes selon la revendication 29, dans laquelle le réservoir de tampon de lyse cellulaire (205), le réservoir de tampon de neutralisation (206) et les troisième et quatrième réservoirs (230,236) comportent en outre chacun un orifice d'admission (231,239).

**35.** Plate-forme pour micro-systèmes selon la revendication 29, dans laquelle chaque micro-canal de mélange comprend plusieurs coudes ayant des angles supérieurs à 90°.

**36.** Plate-forme pour micro-systèmes selon la revendication 29, dans laquelle la vitesse d'écoulement du fluide à travers chacun des micro-canaux de mélange est comprise entre 1 nl/s et 100 μl/s.

**37.** Plate-forme pour micro-systèmes selon la revendication 29, dans laquelle la chambre à cycle thermique (241) comprend en outre un orifice de sortie d'échantillon.

**38.** Plate-forme pour micro-systèmes selon l'une des revendications 12 ou 29, dans laquelle les surfaces internes des structures microfluidiques sont revêtues de parylène.

FIG. 1

FIG. 2

FIG. 3

FIG. 4

FIG. 5

FIG. 6

**FIG. 7**

TIME (SECONDS)

**FIG. 8**

FIG. 9a

FIG. 9b

FIG. 9c

FIG. 9d

**FIG. 9e**

**FIG. 9f**

**FIG. 9g**

FIG. 9h

**FIG. 12**

FIG. 13

FIG. 14

FIG. 15

FIG. 16

FIG. 17a

FIG. 17b

FIG. 17c

FIG. 17d

FIG. 17e

FIG. 17f

FIG. 17g

FIG. 17h

FIG. 17i

FIG. 17j

FIG. 17k

FIG. 20

FIG. 21

FIG. 22

FIG. 23

**FIG. 24**

**FIG. 25**

**FIG. 26**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4683195 A, Mullis
- US 4683202 A, Mullis
- US 4988617 A, Landegren and Hood
- US 5304487 A, Wilding
- WO 9322053 A
- WO 9322058 A
- WO 9853311 A
- US 6063589 A
- US 08761063 B
- US 08768990 B
- US 08910726 B
- US 08995056 B
- US 09315114 B
- US 09579492 B
- US 09595239 B
- US 6582662 B1
- US 91072697 A
- US 6582662 B
- US 6063587 A

### Non-patent literature cited in the description

- QIAamp DNA Mini Kit and QIAamp DNA Blood Mini Kit Handbook. 1999
- **BIMBOIM ; DOLY.** *Nucl. Acids Res.,* 1979, vol. 7, 1513-1522
- Advances in Integrated Genetic Analysis. **ANDERSON et al.** Proc. Micro Total Analysis '98. Kluwer, 1998, 11-16
- **WILDING et al.** *Clin. Chem.,* 1994, vol. 40, 43-47
- **KOPP et al.** *Science,* 1998, vol. 280, 1046
- **MADOU.** Fundamentats of Microfabrication. CRC Press, 1997
- **LARSSON.** *Micro Structure Bull.,* 1997, vol. 1, 3
- **DUFFY et al.** *Anal. Chem,* 1998, vol. 70, 4974-4984
- **DUFFY et al.** *Anal. Chem.,* 1999, vol. 71, 4669-4678